# FASCICULE DE BREVET EUROPEEN

(11) **EP 1 648 769 B1**
(45) Date de publication et mention de la délivrance du brevet: **13.12.2006**
(21) Numéro de dépôt: 04786023.4
(22) Date de dépôt: 30.07.2004
(51) Int. Cl.: B64D 17/40, B64D 21/00

(54) **MACHINE POUR L'INSPECTION, LE PLIAGE ET LE CONDITIONNEMENT AUTOMATIQUES DE PARACHUTES**
MASCHINE ZUM AUTOMATISCHEN INSPIZIEREN, FALTEN UND VERPACKEN VON FALLSCHIRMEN
MACHINE FOR AUTOMATICALLY INSPECTING, FOLDING AND PACKAGING PARACHUTES

(30) Priorité: 01.08.2003 FR 0309546; 01.08.2003 FR 0309547
(43) Date de publication de la demande: 26.04.2006
(73) Titulaire: CLEMESSY, F-68200 Mulhouse (FR)
(72) Inventeur: MAHNER, Pierre, F-68210 Gildwiller (FR); RUSTERHOLZ, Olivier, F-68500 Orschwihr (FR); SCHERRER, Claude, F-68390 Sausheim (FR)
(74) Mandataire: Metz, Paul
(86) Numéro de dépôt international: PCT/FR2004/002065
(87) Numéro de publication internationale: WO 2005/012087

(56) Documents cités:
- FR-A- 1 165 814
- FR-A- 1 209 208
- US-A- 2 386 829
- US-A- 2 399 993
- US-A- 2 452 604
- US-A- 2 486 437
- US-A- 3 417 948
- US-A- 4 146 201

## Description

La présente invention concerne une machine d'inspection, de pliage et de conditionnement automatiques de parachutes. Cette machine admet un parachute en semi-vrac après un saut et une vérification primaire, vérifie son état, le plie et l'introduit dans un sac de voile sur et dans lequel il est conditionné pour un nouveau saut, toutes ces opérations étant effectuées en déroulement automatique.

L'invention concerne tous les parachutes du type hémisphérique, c'est-à-dire à fuseaux, soit à vingt-quatre fuseaux de six panneaux dont quatre fuseaux comportant un filet comme le parachute classique soit en nombre différent. De plus, cette invention, moyennant quelques modifications évidentes pour l'homme du métier pourra néanmoins être appliquée à d'autres types de parachutes.

Un parachute dorsal classique se compose d'une voilure, d'un harnais, d'un sac dorsal, d'un sac de voile "suspentes premières", d'une sangle à ouverture automatique (SOA) et d'un sac de transport. Dans notre invention, nous nous intéresserons principalement à la voilure dont la vérification et le pliage s'effectuent par la machine automatique selon l'invention.

La voilure assure la sustentation dégressive du parachutiste par une faible vitesse limite de descente. Elle est composée d'une voile reliée au harnais par un cône de suspension et un ensemble de manoeuvre.

Au sommet du parachute classique, se trouve un orifice central appelé "cheminée". Le pourtour inférieur de la voile est appelé "bord d'attaque" tandis que le bord de la cheminée est appelé "bord de fuite". Le bord d'attaque est prolongé par une bande circulaire en résille appelée "filet de bord d'attaque" destiné à régulariser l'ouverture du parachute. Des volets accélérateurs, permettant de diminuer le temps d'ouverture du parachute, sont fixés sur le premier panneau à proximité du bord d'attaque de tous les fuseaux. Pour le parachute classique, quatre fuseaux répartis de manière sensiblement équidistante sont partiellement évidés et garnis de filets formant des ouvertures à surface réglable. Ces ouvertures peuvent être plus ou moins fermées par action sur les commandes de manoeuvre. Par réaction, l'échappement de l'air à travers les fenêtres des ouvertures non réduites devient prépondérant et confère à la voilure une vitesse propre pouvant atteindre deux mètres par seconde.

Le cône de suspension est constitué classiquement de vingt-quatre suspentes fixées au bord d'attaque sur les méridiens des fuseaux, et maintenues par des renforts. Les suspentes sont regroupées par six, nouées et cousues sur quatre manilles constituées chacune par un corps portant une flèche gravée, un axe formant vis et une contre-vis de blocage de l'axe. Quatre élévateurs groupés deux par deux sont reliés à la voile par des manilles. Une pièce appelée bélière de libérateur équipe l'extrémité de chaque couple d'élévateurs.

L'ensemble de manoeuvre est composé de quatre groupes identiques dont chacun est constitué par une poignée maintenue par des rubans auto-agrippants à l'arrière de l'élévateur correspondant et une commande de manoeuvre fixée d'une part à l'élévateur et, d'autre part, à une suspente de manoeuvre qui relie la manille au bas de la fenêtre à résille correspondante. Le montage de cette commande reliée à la poignée de manoeuvre constitue un mouflage qui permet d'amplifier l'action du parachutiste au niveau de la toile. Un anneau-guide assure le positionnement de chaque drisse le long de l'élévateur.

Au niveau de la cheminée, les douze rubans des fuseaux sont fixés sur un ruban circulaire de renfort appelé estrope. Ce ruban d'extrémité supérieure de la voile permet de faire le lien avec le sac de voile.

En outre, le pliage du parachute nécessite diverses matières consommables dont une tresse en coton tarée à la rupture destinée à se rompre lors du saut en parachute, des cordes de petit diamètre appelées bouts destinés à l'estrope sur le sac de voile et à la fermeture du sac de voile, ainsi que des bouts servant à la liaison du rabat de protection des suspentes au sac de voile, et des bracelets de lovage.

Lors d'un saut, le parachute se trouve plié dans le sac de voile, qui est lui-même contenu dans un sac dorsal. Le mousqueton situé à une extrémité de la sangle à ouverture automatique (SOA) est accroché à un câble de parachutage solidaire de l'aéronef d'où s'effectuera le saut. L'autre extrémité de la sangle à ouverture automatique est attachée à l'estrope de cheminée au niveau d'un anneau de bretelle. Lorsque le parachutiste saute dans le vide, la sangle à ouverture automatique est tirée vers le bas et se délove. Une fois entièrement délovée la sangle à ouverture automatique se tend et sa traction sur le rabat de lovage déverrouille ce dernier et emporte le sac de voile et les élévateurs hors du sac dorsal tout en délovant les suspentes. Lorsque ces derniers se retrouvent en fin de tension, la tresse de fermeture du sac de voile se rompt et la voile sort. Lorsque la totalité de la voile est extraite du sac et qu'elle est en tension, la liaison estrope de cheminée - anneau de bretelle calibré se rompt. A partir de cet instant, le parachute n'est plus relié à l'aéronef. La voile s'ouvre alors pour s'épanouir, aidée par les filets de bord d'attaque. Une traction exercée par le parachutiste sur les deux poignées de manoeuvre provoque la déformation des deux fenêtres concernées et l'abaissement du bord d'attaque de la voile du côté des fenêtres déformées. L'échappement de l'air par les fenêtres opposées devient prépondérant, il en résulte une poussée dans la direction des tractions et l'acquisition d'une vitesse propre. C'est par ce moyen que le parachutiste peut orienter sa descente.

Arrivé au sol, le parachutiste peut actionner le dispositif de déventement pour déventer sa voile afin que, éventuellement gonflée par le vent, celle-ci ne l'entraîne pas sans qu'il puisse s'y opposer.

De manière conventionnelle, après un saut, un tel parachute est plié sommairement par l'utilisateur et ramené puis lavé, séché et vérifié par des spécialistes, et enfin plié manuellement par deux opérateurs.

Lors de l'inspection du parachute, appelée généralement "visite", les panneaux et leurs douze rubans méridiens, les croisillons et l'estrope de cheminée sont inspectés visuellement afin de détecter des tâches, des affaiblissements de la matière, des brûlures ou des trous éventuels. Les tâches sont principalement des tâches de sang ou de goudron et doivent être impérativement détectées pour leur élimination ultérieure. En effet, les tâches de sang ont un impact psychologique négatif sur le parachutiste lorsque, lors d'un saut, celui-ci examine si sa voile s'est correctement ouverte et le goudron peut entraîner des micro-déchirures lors du choc généré par l'ouverture de la voile. Toutes les autres dégradations physiques du parachute doivent évidemment être également impérativement détectées car elles menacent la sécurité du parachutiste qui, s'il utilise un matériel pouvant se rompre ou se déchirer lors d'un saut, risque une chute toujours mortelle.

Avant le pliage du parachute proprement dit, la voile doit d'abord être mise en ordre sur un plan de travail. On commence alors par saisir une estrope de la voile, la remonter vers le haut du plan de travail et l'accrocher à un crochet sur le plan de travail. On saisit alors quatre suspentes et on les maintient en se portant du bord d'attaque aux élévateurs. On effectue alors le démêlage et on fixe les manilles deux par deux en disposant les élévateurs à plat, les commandes de manoeuvre avant et arrière à l'extérieur des crochets du palonnier.

Ensuite, on tend le parachute et on inspecte les élévateurs.

Pour continuer, on effectue l'inspection et le pliage longitudinal de la voilure. On saisit alors une des suspentes et, tout en la maintenant, on se porte au bord d'attaque de la voile en inspectant les suspentes. En prenant la suspente précédente en main, on lève un des fuseaux de l'autre main en vérifiant la partie gauche de ses panneaux respectifs. On rabat alors le fuseau vers la gauche en inspectant la partie droite des panneaux précédents, la suspente suivante rejoint alors la suspente précédente. Ces opérations sont alors répétées jusqu'à ce que pour le parachute classique, les vingt-quatre fuseaux aient été vérifiés.

A cette étape du pliage, la voile se trouve pliée dans son ensemble par demi-fuseaux. On engage alors une main entre les deux groupes de suspentes à mi-distance entre le bord d'attaque et les élévateurs et on la fait glisser jusqu'au bord d'attaque. On l'insère alors à l'intérieur de la voile jusqu'au pli médian d'un des fuseaux et on saisit les fuseaux supérieurs de l'autre main. La voile se trouve alors en position dite de mise en "sapin". A cette étape, quelqu'un contrôle le démêlage des suspentes de référence, les commandes de manoeuvre, le maintien des poignées par les rubans auto-agrippants et la mise en ordre des élévateurs sur le palonnier, et il s'assure du bon verrouillage des capots du système de déventement.

Pour poursuivre, l'opérateur introduit les suspentes dans un sélecteur, un dispositif à deux fentes permettant de séparer les suspentes en deux groupes, rabat les fuseaux de gauche vers la droite de manière à ce que la partie rabattue ait le même axe que le toron (faisceau torsadé) de suspentes, puis fait de même pour les fuseaux de droite vers la gauche en s'assurant que le groupe de suspentes est centré au milieu des fuseaux et on finit par lester la voile. La voile se trouve alors en position dite de mise en "portefeuille".

Arrive ensuite l'étape d'introduction de la voile dans le sac de voile. On dispose le sac de voile à plat dans le prolongement de la voile, les pontets de lovage orientés vers le dessus. On dégage l'estrope de la cheminée du crochet du plan de travail, on l'introduit dans le sac et on le ressort par la fenêtre supérieure pour la présenter au niveau de l'anneau de sangle. On lie ensuite l'estrope de cheminée à l'anneau de sangle à l'aide d'une tresse. On saisit ensuite la voile à une distance d'une main de la cheminée et on la pousse au fond du sac vers l'un de ses côtés. En retirant progressivement les lests, on introduit la voile par plis successifs de la largeur du sac de voile d'un côté vers l'autre jusqu'au milieu intérieur des panneaux. On maintient alors le bord d'attaque et le toron de suspentes d'une main, on effectue un "S" en positionnant le bord d'attaque au-dessus. On introduit le pli dans le sac de voile de façon que le bord d'attaque soit dans le plan de l'ouverture du sac de voile. On verrouille alors le sac de voile en introduisant successivement dans chacune des quatre boucles de fermeture une tresse de telle sorte que les deux brins libres débouchent sur la partie supérieure et du côté gauche. On dispose ensuite le toron de suspentes entre les boucles de fermeture et on relie les brins libres de la tresse par un noeud de huit suivi d'un noeud plein poing avant de couper les brins libres à une distance de deux doigts du noeud. Pour finir, on tasse le contenu du sac à l'aide d'une batte.

A cette étape, il ne reste plus qu'à lover les suspentes. Pour ce faire, on commence par saisir les suspentes à une distance de verrouillage égale à la longueur du sac en tirant de bas en haut. On forme alors la première love à la partie haute du sac et on la maintient du côté gauche par un bracelet de lovage installé à poste fixe sur la sangle extérieure à pontets. On amène ensuite le toron sous le volet de protection du sac et on forme une seconde love du côté droit et on la maintient par un bracelet de lovage.

On procède ensuite au lovage du toron de suspentes en effectuant des loves alternativement de gauche à droite du sac, jusqu'à l'extrémité des suspentes en les distribuant à raison de trois loves par pontet et le reliquat sur le quatrième pontet, chaque love dépassant de la bande à pontets extérieure de deux doigts environ. Pour finir, on effectue la dernière love au plus près des manilles en l'immobilisant par deux tours du bracelet de lovage fixé sur la sangle intérieure à pontets.

Le sac de voile est alors prêt à être conditionné dans un sac dorsal qui sera monté sur un harnais.

On a décrit ci-dessus l'inspection et le pliage manuel d'un parachute classique pour illustrer le problème résolu par l'invention et les difficultés à surmonter. Il en serait de même pour des parachutes moins conventionnels.

La cadence d'un tel pliage ne peut théoriquement pas dépasser cinq parachutes à l'heure pour deux plieurs sur une même table. Ce travail étant très physique et fatigant, il ne peut être prolongé trop longtemps et des pauses régulières sont nécessaires.

De plus, ce travail est long, délicat et fastidieux, et doit néanmoins être effectué avec le plus grand soin pour des raisons évidentes de sécurité.

En outre, l'inspection des différents éléments peut ne pas révéler certains défauts en raison de leur imperceptibilité à l'oeil nu ou d'une erreur humaine et ceci peut avoir de graves conséquences. Une technologie particulière destinée à la vérification de la voile est donc souhaitée.

Il existe par conséquent un besoin pour une machine pouvant effectuer de manière automatique les étapes de pliage et de vérification du parachute, de telles machines ayant déjà été étudiées mais n'ayant jamais été inventées en totalité en raison de la grande difficulté de la tâche à mettre en oeuvre de manière automatisée.

La longueur de l'ensemble à plier pouvant varier d'un parachute à un autre, la machine idéalement, doit être capable de mesurer cette longueur et doit surtout pouvoir s'adapter à de telles variations.

Parmi les machines envisagées, on peut citer les brevets suivants mais aucun n'a réellement apporté de solution satisfaisante au problème technique soulevé. On connaît par exemple un procédé de pliage de parachute par le brevet US n° 2,936,138 au nom de F. B. Stencel consistant à répartir des anneaux sur la voile du parachute et à ensuite enfiler ceux-ci sur un mat vertical. Cependant cette technique de pliage nécessite la modification et l'alourdissement du parachute, ce qui n'est pas souhaitable, elle n'est pas automatisée et on ne s'occupe pas du tout du pliage du cône de suspension et de l'ensemble de manoeuvre.

Par le brevet US n° 2,486,437 au nom de R. F. Ryder, on connaît une table de pliage de parachute démontable n'ayant aucune caractéristique commune avec celle de l'invention.

Le brevet US n° 2,399,993 au nom de R. I. Elam décrit une machine servant à mettre un parachute en tension verticale. Ne réalisant aucun pliage et n'étant pas automatisée, cette machine diffère considérablement de la présente invention.

Le brevet US n° 3,417,948 au nom de A. H. Hoormann, divulgue un outil pour le lovage des suspentes utilisant deux structures démontables en vis-à-vis sur lesquelles sont montés des crochets en U et des crochets en L. Une fois le sac de voile positionné sur cet outil, les deux structures démontables sont mises en place, puis l'opérateur utilise les crochets en U pour positionner manuellement les élastiques de maintien du sac de voile tandis que les crochets en L servent au lovage manuel des suspentes. Lorsque ces dernières sont lovées par l'opérateur, il place manuellement les élastiques de maintien sur chacune des loves formées sur la partie verticale des crochets en L. Enfin, les deux structures démontables sont enlevées afin de libérer le sac de voile. De par les moyens décrits le composant et son fonctionnement, l'outil décrit diffère totalement de l'outil manipulateur des élastiques de maintien et des doigts utilisés par le caisson de lovage de la présente invention. L'outil décrit dans ce brevet est entièrement manuel. Aucune solution pour son automatisation n'est donnée et de plus il semble qu'il ne puisse pas être automatisé de manière évidente et à un rythme de fonctionnement suffisant.

D'autres solutions sont divulguées dans divers brevets mais concernent généralement un nouveau type de procédé de pliage non-automatisé ou un nouveau type de parachute dont le pliage est plus facile. Cependant, ces documents ne divulguent aucune des solutions décrites pour la machine de la présente invention.

Afin de répondre aux différents problèmes soulevés précédemment, le but de l'invention est de fournir une machine qui prend en compte un parachute et qui le référence, qui réalise une inspection de surface de la voile pour vérifier son état, qui plie le parachute de la manière conventionnelle et l'introduit dans un sac de voile afin que celui-ci soit prêt à l'emploi, ces étapes étant automatisées, fiables, facilement mises en oeuvre, contrôlées par un seul opérateur et pouvant s'effectuer dans un temps court.

La machine selon l'invention comporte quatre unités fonctionnelles principales :
- un poste d'introduction où se réalise une identification de la voilure et une mise en référence pour la suite des opérations, ce poste comportant un outil d'estrope et un outil de bélière formant un ensemble solidaire lorsqu'ils supportent le parachute pour les phases ultérieures ;
- un poste de vision où on conforme la voilure pour présenter chaque couple de deux fuseaux successifs des vingt-quatre fuseaux devant un ensemble de vision ;
- un poste de pliage-lovage où la voile est pliée en position "sapin" puis en position "portefeuille" avant d'être lovée et mise dans le sac de voile, et où les suspentes sont lovées et où on ajuste les loves des suspentes dans les bracelets élastiques ; et
- un portique de transfert ayant une fonction de servitude pour transporter la voilure d'un poste à l'autre.

D'autres caractéristiques et avantages de l'invention apparaîtront à la lecture de la description détaillée qui va suivre, description faite en référence aux dessins annexés, dans lesquels :
- la figure 1 est une vue en perspective des différents ensembles principaux constituant la machine selon l'invention ;
- la figure 2 est une vue en perspective d'un parachute dorsal hémisphérique classique en vol ;
- la figure 3 est une vue en perspective d'un parachute dorsal classique au sol ;
- la figure 4 est une vue en perspective du poste d'introduction ;
- la figure 5 est une vue en perspective de l'outil d'estrope ;
- la figure 6 est une vue latérale de l'outil d'estrope auquel est accroché l'estrope de cheminée du parachute ;
- la figure 7 est une vue en perspective de l'outil de bélière monté sur le mécanisme de rattrapage du poste d'introduction ;
- la figure 8 est une vue schématique de l'arrière (c'est-à-dire en direction de l'estrope, dans l'axe du parachute) d'une partie de la voilure une fois dévrillée ;
- la figure 9 est une vue en perspective du poste de vision ;
- la figure 10 est une vue en perspective du conformateur du poste de vision ;
- la figure 11 est une vue latérale en perspective du conformateur du poste de vision introduit dans la voile ;
- la figure 12 est un ensemble de vues schématiques A à G de l'arrière représentant la séquence des différentes opérations effectuées par le conformateur pour présenter chaque couple de fuseaux de la voile devant l'ensemble de vision ;
- la figure 13 est une vue en perspective du poste de pliage-lovage ;
- la figure 14 est une vue schématique en trois parties des opérations effectuées au poste de pliage-lovage illustrant les étapes de transformation de la distribution circulaire des suspentes en distribution linéaire, chaque étape étant représentée simultanément avec une vue en perspective et une vue de l'arrière ;
- la figure 15 est une vue schématique en perspective en deux parties illustrant les opérations effectuées au poste de pliage-lovage représentant les étapes de mise en sapin de la voile ;
- la figure 16 est une vue schématique latérale puis de l'arrière en plusieurs parties illustrant les étapes de mise en portefeuille de la voile au poste de pliage-lovage ;
- la figure 17 est une vue en perspective du caisson de lovage du poste de pliage-lovage ;
- la figure 18 est un ensemble de vues schématiques de dessus représentant les différentes étapes du lovage de la voile ;
- la figure 19 est une vue en perspective du dispositif d'introduction de la voile dans 1e sac de voile ;
- la figure 20 est un groupe de vues schématiques de dessus représentant les différentes étapes de l'introduction de la voile dans le sac de voile ;
- la figure 21 est une vue en perspective de l'outil manipulateur du poste de pliage-lovage ;
- la figure 22 est la représentation d'une séquence de plusieurs vues de dessus illustrant les différentes étapes du lovage des suspentes ;
- la figure 23 est la représentation schématique d'une séquence illustrant la pose des bracelets élastiques de maintien sur les loves de suspentes ; et
- la figure 24 est une vue en perspective d'un sac de voile à la sortie de la machine selon l'invention prêt à être introduit dans un sac dorsal.

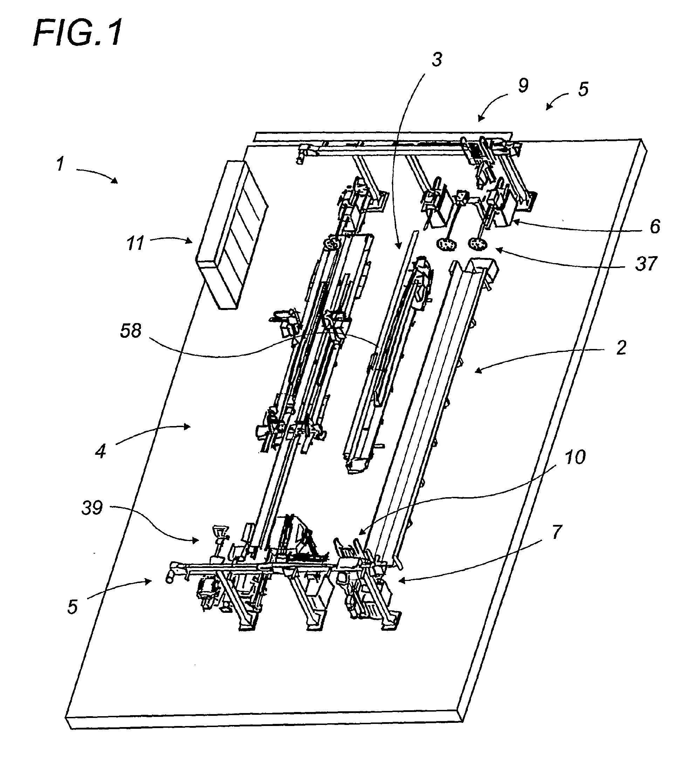

La machine d'inspection, de pliage et de conditionnement automatiques de parachutes selon la présente invention va maintenant être décrite de façon détaillée en référence aux figures 1 à 24 en utilisant comme exemple un parachute hémisphérique classique. Les éléments équivalents représentés sur les différentes figures porteront les mêmes références numériques.

En se référant à la figure 1 on peut voir la façon dont peuvent être agencés et combinés les différentes unités fonctionnelles principales de la machine 1 d'inspection, de pliage et de conditionnement automatiques de parachutes selon l'invention. Cette configuration est préférée mais on peut également envisager de nombreuses variantes de configuration sans s'écarter de la portée de l'invention.

Sur cette figure, le poste d'introduction 2, le poste de vision 3 et le poste de pliage-lovage 4 sont situés les uns à côté des autres dans cet ordre et de manière sensiblement parallèle les uns aux autres. Le portique de transfert 5, comprend deux organes de levage 6, 7 sensiblement perpendiculaires aux différents postes 2, 3, 4 et mobiles de préférence simultanément de façon à pouvoir transférer le parachute 8 à plier et son support d'un poste à un autre. Parmi ces organes de levage, on compte un organe de levage situé du côté bélières, appelé "organe de levage bélières" 6, et un organe de levage situé du côté estrope, appelé "organe de levage estrope" 7. A chaque organe de levage 6, 7 correspond pour chaque portique une structure d'accueil 9, 10.

Sur cette figure 1 est également représentée l'armoire 11 contenant les commandes d'automatisation de la machine 1 de l'invention. Celles-ci ne seront pas détaillées dans la présente description.

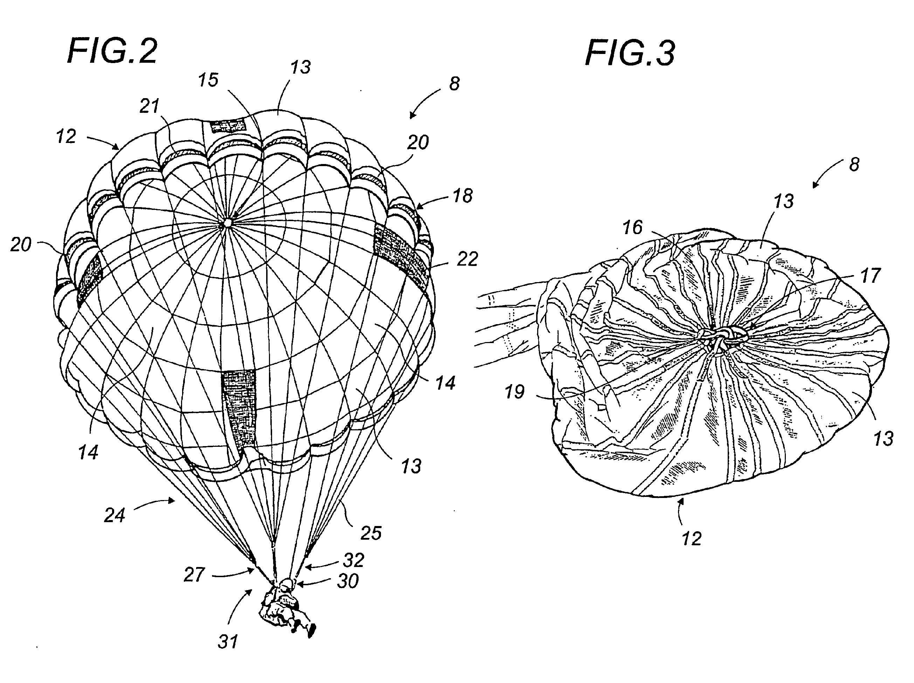

Afin d'aider à la compréhension de l'invention, une description sommaire préalable d'un exemple de parachute 8 est donnée ci-après en référence aux figures 2 et 3.

Comme décrit précédemment, ce parachute comporte une voile 12 composée de vingt-quatre fuseaux 13 de six panneaux 14. Cette voile présente un orifice central 15 appelé "cheminée" traversé par des liens inter-fuseaux 16 regroupés à leur jonction par une boucle appelée estrope 17. Le pourtour inférieur de cette voile 18 est appelé "bord d'attaque" tandis que le bord de la cheminée 19 est appelé "bord de fuite". Le bord d'attaque 18 est prolongé par une bande circulaire en résille 20 appelée "filet de bord d'attaque". Des volets accélérateurs 21 sont fixés sur le premier panneau à proximité du bord d'attaque 18 de tous les fuseaux 13. Quatre fuseaux 13 répartis de manière sensiblement équidistante sont partiellement évidés et garnis de filets 22. Ces ouvertures peuvent être plus ou moins fermées par action sur les commandes de manoeuvre.

Le cône de suspension 24 est constitué de suspentes 25 fixées au bord d'attaque 18 sur les méridiens des fuseaux, et maintenues par des renforts 26. Les suspentes 25 sont regroupées par six, nouées et cousues sur quatre manilles 27. Quatre élévateurs 28 groupés deux par deux sont reliés à la voile par des manilles 27. Une bélière de libérateur 30 équipe l'extrémité de chaque couple d'élévateurs 28.

L'ensemble de manoeuvre 31 est composé de quatre groupes identiques dont chacun est constitué par une poignée 32 maintenue par des rubans auto-agrippants à l'arrière de l'élévateur correspondant et une commande de manoeuvre fixée d'une part à l'élévateur et, d'autre part, à une suspente de manoeuvre qui relie la manille 27 au bas de la fenêtre à résille 20 correspondante. Un anneau-guide assure le positionnement de la drisse le long de l'élévateur 28.

En référence aux figures suivantes, nous allons maintenant nous intéresser plus spécifiquement aux différents postes 2, 3, 4 composant la machine 1 de la présente invention. De manière générale, nous décrirons d'abord le poste dans son ensemble, puis nous nous intéresserons plus particulièrement aux éléments les plus importants de chacun de ces postes.

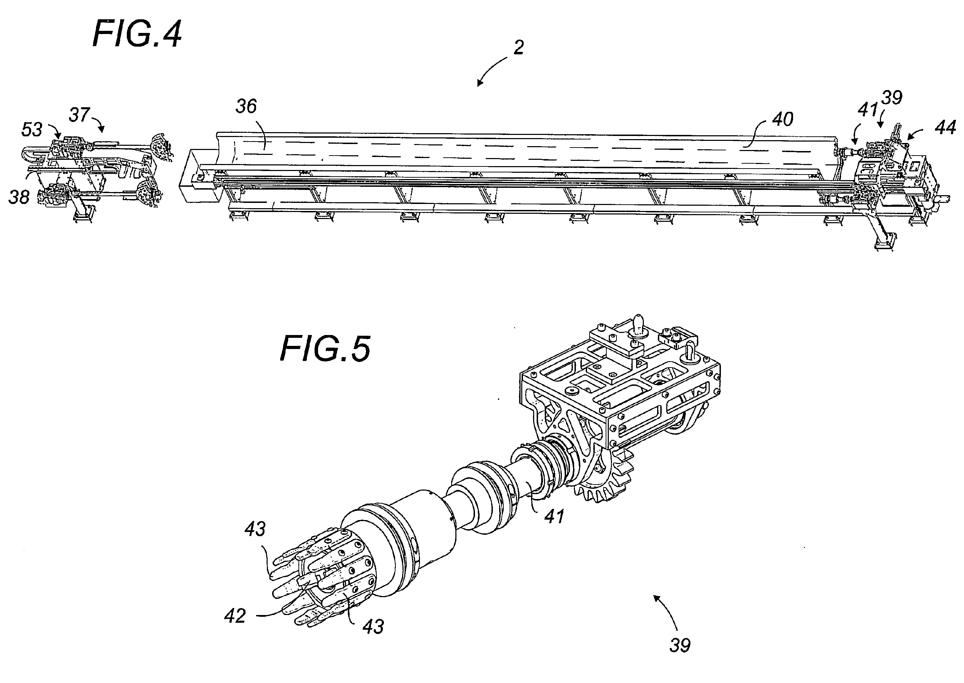

La figure 4 est une vue en perspective du poste d'introduction 2, lequel comporte : un bac de réception 36 du parachute 8 dans lequel le parachute 8 est déposé en semi-vrac, un outil de bélière 37 fixé sur une table d'indexation 38 sur lequel est accrochée la bélière 30 du parachute, et un outil d'estrope 39 sur lequel est accrochée l'estrope de cheminée 17, le bac de réception 36 étant situé entre ces deux outils 37 et 39. Dans ce bac 36, revêtu par exemple d'un revêtement anti-abrasion 40, le parachute 8 est mis entre l'outil d'estrope 39 et l'outil de bélière 37.

L'outil d'estrope 39 représenté sur la figure 5 comporte un arbre mobile en pivotement 41 à l'extrémité duquel se trouve un crochet d'accrochage 42 et douze doigts 43 appelés doigts d'estrope, correspondant aux douze rubans 45 des fuseaux 13 du parachute 8. L'autre extrémité de l'outil d'estrope 39, celle la plus éloignée du parachute 8, est solidaire d'un support amovible 44 mobile de manière linéaire suivant l'axe de l'arbre mobile 41 et pouvant être saisi et déplacé par le premier organe de levage 7 du portique de transfert 5. Au niveau de cet outil d'estrope 39, l'opérateur accroche manuellement l'estrope 17 au niveau du crochet 42 situé sur l'outil d'estrope 39 et introduit les douze rubans 45 des fuseaux 13 entre les doigts d'estrope 43.

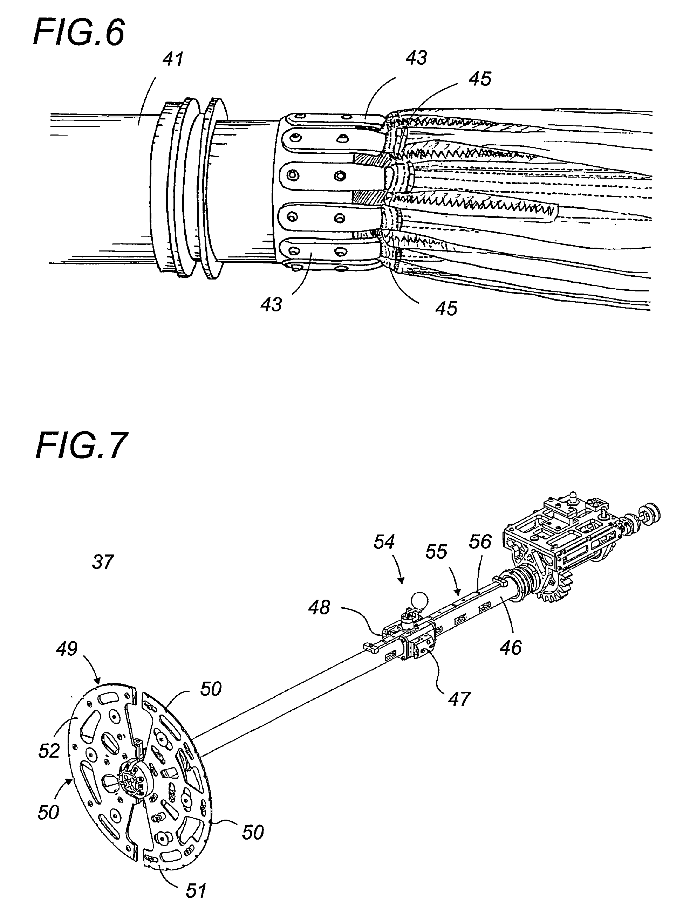

L'outil de bélière 37 représenté sur la figure 7 comporte un arbre mobile en pivotement 46 sur lequel sont montés deux dispositifs de fixation 47, 48 des bélières 30 en vis-à-vis par rapport à l'axe de cet arbre 46. Au niveau d'une extrémité de cet arbre 46, l'outil de bélière 37 comporte un support de dévrillage de voilure 49 sous la forme d'un disque. Ce disque de dévrillage de voilure 49 présente vingt-quatre encoches 50, c'est-à-dire autant d'encoches que de suspentes, réparties de manière sensiblement équidistante sur son pourtour et pouvant être préférentiellement verrouillées en fermeture. Ces encoches verrouillables 50 sont destinées à recevoir à immobilisation chacune des vingt-quatre suspentes 25 distribuées angulairement en faisceau selon un axe perpendiculaire à la surface du disque 49 et sensiblement parallèle à celui des encoches 50 et de l'arbre 46 de l'outil de bélière 37. Ce disque 49 se compose de deux demi-disques 51, 52 articulés entre eux pour qu'il puisse se replier sur lui-même à la manière des ailes d'un papillon, les deux demi-disques 51, 52 se retrouvant alors superposés l'un contre l'autre bord à bord. Par exemple, le dispositif d'actionnement pour l'actionnement en verrouillage-déverrouillage des encoches 50 et en mouvement de l'articulation des deux demi-disques 51, 52 est situé à l'intérieur de l'arbre 46 de l'outil de bélière 37. Parmi les vingt-quatre encoches 50, une sur six, c'est-à-dire quatre d'entre elles sont plus profondes que les autres, réparties de manière sensiblement équidistante sur le pourtour du disque. Chacune de celles-ci doit en effet recevoir un élévateur en plus d'une suspente 25. L'autre extrémité de l'outil de bélière 37, celle la plus éloignée du parachute, est montée à coulissement indexé sur un support amovible fixé au sol 53 et pouvant être saisi et déplacé par le second organe de levage 6 du portique de transfert 5.

Il est important de noter que les moteurs actionnant le pivotement de l'arbre de l'outil de bélière et l'arbre de l'outil d'estrope sont parfaitement synchrones en mouvement et que ces arbres sont situés sur le même axe géométrique de pivotement, ce qui permet de faire pivoter le parachute sur lui-même selon cet axe.

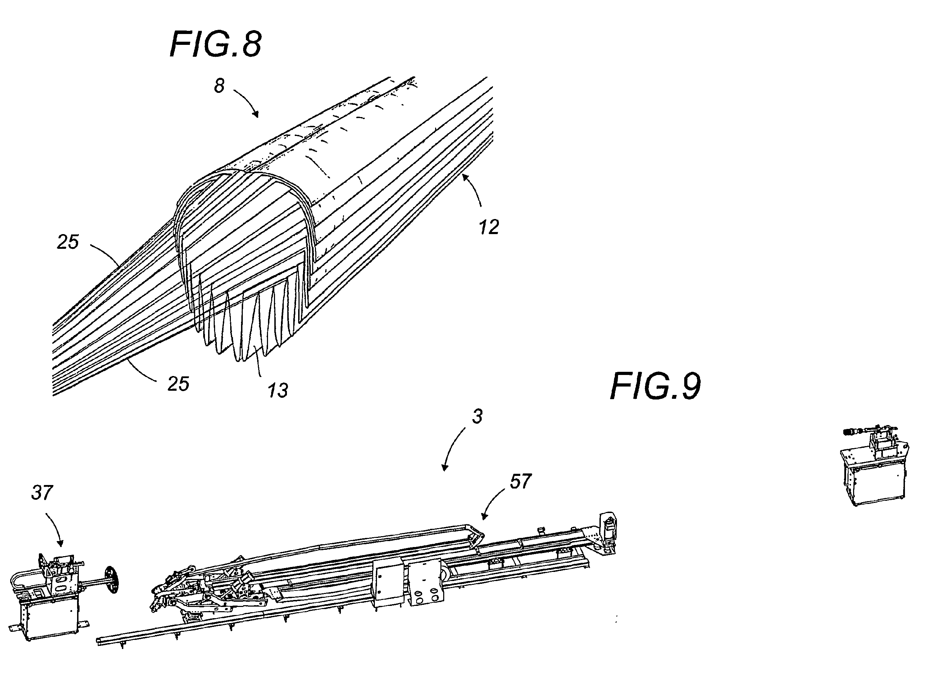

Afin de dévriller le cône de suspension 24, l'opérateur met en référence les vingt-quatre suspentes 25 et les quatre élévateurs en les distribuant de manière circulaire dans les encoches 50 situées sur le disque 49 de l'outil de bélière 37. L'opérateur est aidé dans cette opération par le pivotement simultané du cône de suspension 24, de la voile 12 et des arbres des outils de bélière et d'estrope 46, 41. Afin de dévriller la voile 12 si celle-ci semble tournée sur elle-même, l'opérateur peut également faire pivoter l'outil de bélière 46 indépendamment de l'outil d'estrope 41. Une voile 12 ainsi dévrillée est représentée en vue de l'arrière sur la figure 8.

Au cours de cette étape de mise en place du parachute 8 sur le poste d'introduction 2, le parachute 8 est mis en tension par le déplacement linéaire de l'outil d'estrope 41. Il s'agit par exemple d'un mouvement accompagné, c'est-à-dire asservi à un couple de traction limité. Ainsi, en cas de problème lors de la mise en tension du parachute 8, si l'opérateur retient la voile 12, la régulation du mouvement stoppe l'appareil. L'opérateur peut alors corriger manuellement le problème et lorsqu'il relâche la voile 12, le mouvement recommence. Cette sécurité permet entre autre de ne pas entraîner accidentellement l'opérateur avec la voile 12 sur le bac de réception 36.

La longueur totale d'un parachute à l'autre pouvant varier jusqu'à 25 cm, un mécanisme de rattrapage 54 monté sur un chariot mobile en coulissement linéaire 55 est prévu sur l'outil de bélière 37. Ce mécanisme de rattrapage 54 présente des crans indexés 56 permettant de déplacer simultanément les deux dispositifs de fixation 47, 48 des bélières en une position donnée pour laquelle le parachute 8 est en tension idéale lorsque la partie mobile 44 de l'outil d'estrope 39 est en fin de course (position arrière extrême). Ceci permet de contrôler, de valider et de rattraper l'éventuelle disparité de longueur du parachute 8 tout en gardant la même distance de l'outil de bélière 37 à l'outil d'estrope 39 d'un parachute à l'autre.

Par exemple, lorsque le parachute 8 a été mis en tension, référencé et dévrillé, l'opérateur se rend au niveau de l'outil d'estrope 39 et contrôle si les extrémités des douze rubans 45 des fuseaux 13 entre les doigts d'estrope 43 sont bien situées dans un même plan vertical. Ceci permet de déceler un défaut éventuel de la voile 12 du parachute 8 qui entraîne une mauvaise ouverture de la voile 12. S'il s'agit d'un mauvais positionnement effectué par l'opérateur, ce dernier peut détendre la voile 12 pour y remédier avant de la retendre. A ce moment là, l'opérateur a fini son travail au poste d'introduction 2. Le parachute 8 est alors prêt à être transféré au poste suivant ou à être rejeté s'il présente un défaut majeur décelé à cette étape.

Il doit être bien compris que toutes les caractéristiques dimensionnelles et chiffrées, par exemple le nombre d'encoches du disque, peuvent varier selon les particularités du parachute.

Pour le transfert du parachute 8, celui-ci reste solidaire de l'outil d'estrope 39 et de l'outil de bélière 37, formant ainsi un ensemble de transfert. Dans cet ensemble de transfert, la voile 12 est par exemple en tension relâchée lors de son transport. C'est cet ensemble de transfert qui est saisi et transporté par le portique de transfert 5, chaque organe de levage 6, 7 de ce dispositif 5 venant prendre un des outils (d'estrope ou de bélière) après son déverrouillage, le soulève jusqu'à une hauteur à laquelle la translation du parachute 8 ne rencontre aucun obstacle, le déplace en translation jusqu'au poste suivant et enfin le dépose au niveau de ce poste.

Cette méthode de transfert est la même quels que soient le poste d'origine et le poste d'arrivée.

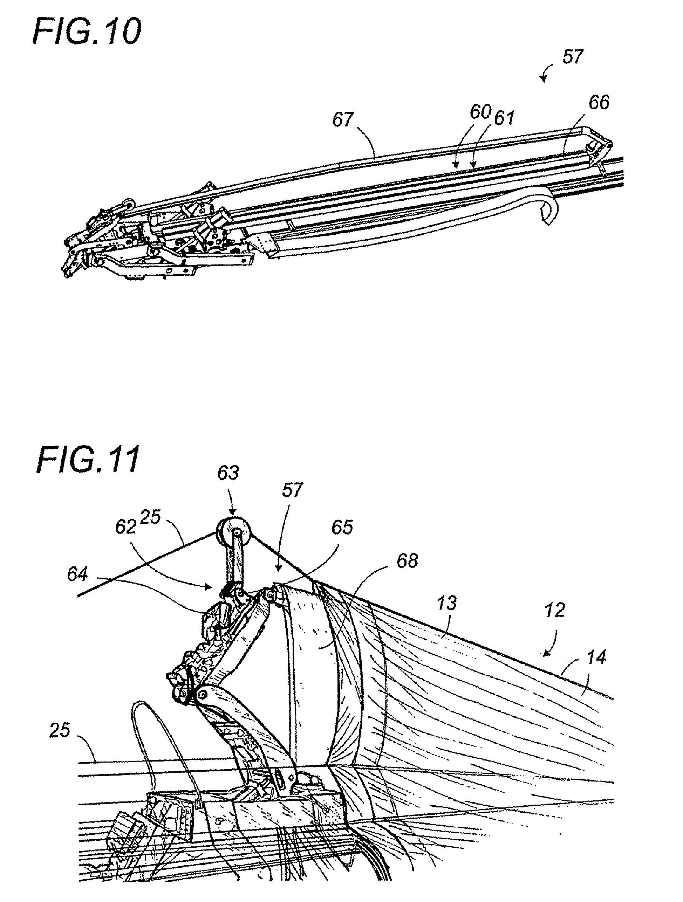

Le poste de vision 3 comporte un conformateur 57 représenté sur la figure 10. Ce conformateur 57 est en position abaissée et repliée sous les suspentes 25 lors du dépôt de la voile 12 par le portique de transfert 5 au poste de vision 3. Ce poste 3 comprend également un ensemble de vision préférentiellement à image numérisée 58 comportant généralement plusieurs rangées de capteurs d'images 59 situés de part et d'autre de la voile 12 lorsque celle-ci est en place au poste de vision 3, et un dispositif d'éclairage spécifique 60 comprenant une rampe lumineuse 61 à base de diodes électroluminescentes.

A ce poste 3, on conforme la voile 12 pour présenter chaque couple de deux fuseaux consécutifs 13 des vingt-quatre fuseaux 13 devant un ensemble de vision à images numérisées 58 réunissant plusieurs capteurs d'images 59.

Une fois la voile 12 déposée au poste de vision 3, le conformateur 57 va avancer et s'insérer à l'intérieur de la voile 12 entre deux fuseaux successifs 13, sensiblement au milieu de celle-ci. Un tel conformateur 57 est représenté introduit dans la voile 12 sur la figure 11. Sur cette figure, le conformateur 57 comporte au niveau de sa partie supérieure, un dispositif de basculement 62 présentant une poulie ou un galet 63, actionné par un vérin 64 monté sur un axe pivotant 65. Lors du soulèvement du conformateur 57, ce galet 63 saisit la suspente supérieure 25 et la soulève, ce qui permet de soulever une partie de la voile 12 par cette suspente 25 et de présenter les deux fuseaux adjacents 13 aux capteurs d'images 59 de l'ensemble de vision 58. Sous ce galet 63, le conformateur 57 comporte également deux bras 66, 67 disposés l'un au-dessus de l'autre et qui sont introduits dans la voile 12. Préférentiellement, le bras inférieur 66 comporte la rampe d'éclairage 61 présentant par exemple 2700 diodes électroluminescentes. Le bras supérieur 67 comporte un écran de diffusion de la lumière 68. Il s'agit par exemple, d'une étoffe blanche 68 dont les deux pans se prolongent de chaque côté du bras supérieur 67 sensiblement jusqu'au dispositif d'éclairage 60 lorsque le conformateur 57 est en position relevée. Cet écran de diffusion 68 de la lumière permet de créer une illumination uniforme des deux panneaux 14 de la voile 12 à examiner et permet également d'obtenir un fond homogène pour examiner aussi les filets 22 de la voile 12. Le dispositif d'éclairage 60 est situé à l'intérieur de la voile 12 et non à l'extérieur de celle-ci, ce qui empêche, lors de l'éclairage de la voile 12, que l'ombre d'un éventuel défaut de celle-ci soit projetée sur l'autre panneau examiné 14.

L'utilisation de diodes électroluminescentes permet d'obtenir un éclairage qui n'éblouit pas l'opérateur. Ces sources présentent une longue durée de vie et une excellente tenue aux mouvements et aux vibrations, ce qui n'est pas le cas des ampoules électriques classiques. Lors d'une prise d'image, le galet 63 pivote d'une dizaine de degrés selon un axe sensiblement horizontal situé sensiblement dans l'axe du parachute 8 afin de présenter la totalité d'un des deux panneaux 14 examinés aux capteurs d'images 59 situés de son côté.

Le dispositif ainsi formé et permettant de mettre en tension les deux fuseaux examinés est également appelé "pantographe".

La prise d'image se fait simultanément avec une illumination produite par la rampe d'éclairage 61. Elle est effectuée d'un côté de la voile 12, au niveau d'un des fuseaux 13, puis de l'autre côté de la voile 12, au niveau de l'autre fuseau 13, après pivotement de la poulie 63 de l'autre côté de la voile 12. En effet, la présentation aux capteurs d'images 59 s'effectue par pivotement alternativement à gauche puis à droite du support 65 du galet 63 et de l'outil d'estrope 39.

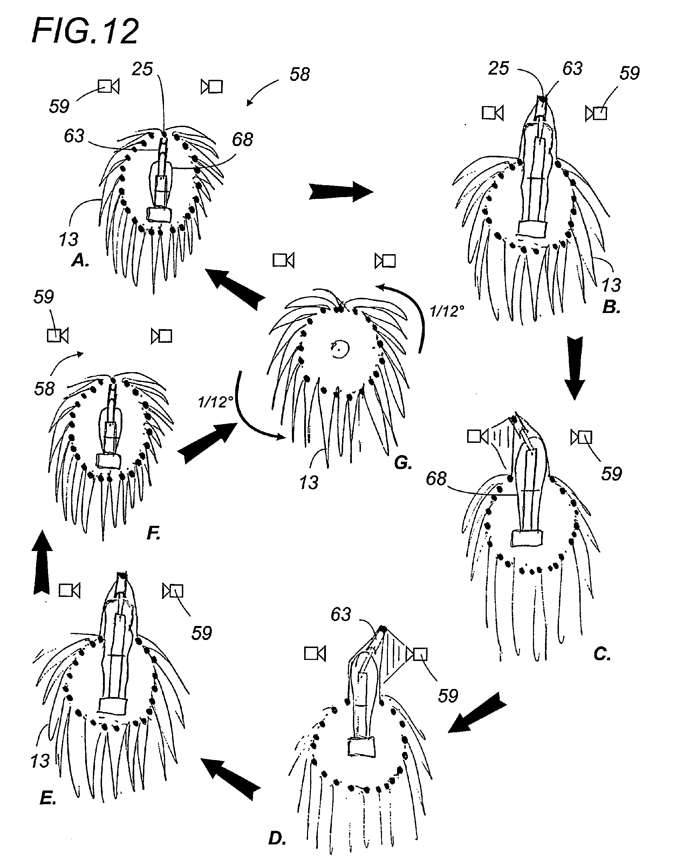

Lorsque la prise d'image a été effectuée pour les deux pans examinés, le conformateur 57 est replié et les outils de bélière et d'estrope 37, 39 font pivoter la voile 12 d'un douzième de tour afin de présenter deux nouveaux panneaux 14 aux capteurs d'images 59. Cette séquence effectuée par le conformateur 57 pour présenter chaque couple de fuseaux 13 de la voile 12 devant l'ensemble de vision 58 est illustrée par la figure 12. L'opération de prise d'image est alors la même que précédemment et se répète pour les vingt-quatre panneaux 14. Il y a donc vingt-quatre prises d'images et douze étapes d'introduction/retrait du conformateur 57.

Les images prises lors de ces étapes sont alors traitées et analysées par des moyens informatiques qui permettent d'en déduire la présence de défauts dans la voile 12, les filets 22 et les suspentes 25, qu'il s'agisse de dépôt de matière(s) (tâches de sang, dépôts de goudrons, traces de terre, corps étrangers et analogue) ou de manque de matière (déchirures, ruptures, trous ou brûlures).

En cas de telle constatation, l'opérateur en est informé, ce qui lui permet de décider si le processus de pliage de la voilure est à continuer ou si cette dernière est retirée de la machine 1 d'inspection, de pliage et de conditionnement automatiques de parachutes.

Lorsque les vingt-quatre fuseaux 13 ont été vérifiés, la voile 12 est à nouveau mise préférentiellement en tension relâchée par les outils d'estrope et de bélière 39 et 37, l'ensemble étant transporté dans cet état par le portique de transfert 5 vers le poste suivant.

Le poste de vision est une exigence liée à des défauts d'aspect pouvant présenter un risque potentiel. L'invention mérite cependant tout son mérite inventif si ce poste est supprimé dans le cadre d'une inspection préalable manuelle.

Il est à noter que selon un mode de réalisation préféré de l'invention, le parachute 12 est muni d'une pastille électronique (non représentée) pouvant permettre le stockage et la lecture de données. Sur cette pastille sont stockées de nombreuses informations telles que l'identification du parachute, les dates de vérification, de pliage et d'utilisation, la nature et la date de réparations et opérations de maintenance effectuées sur le parachute, l'identité de la personne qui s'est chargée de chacune de ces opérations, et enfin l'état général du parachute.

Selon ce mode de réalisation préféré, les moyens informatiques de traitement des images (non représentés) peuvent consigner sur la pastille d'identification du parachute les défauts détectés.

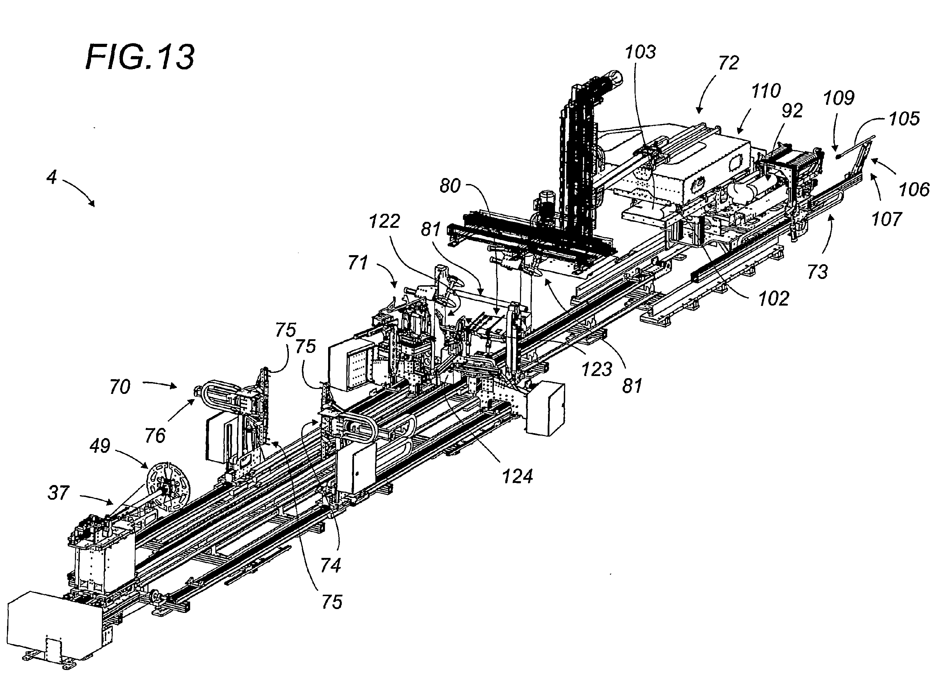

Le poste de pliage-lovage 4, représenté sur la figure 13, constitue le dernier poste de la machine d'inspection, de pliage et de conditionnement automatiques de parachutes 1. A ce poste 4, de nombreuses opérations sont effectuées afin de plier, lover et introduire le parachute 8 dans un sac de voile 69.

Ce poste 4 comporte un ensemble de distribution linéaire des suspentes 70, un ensemble de pliage 71, un ensemble de lovage 72 et un ensemble d'introduction 73 du parachute 8 dans le sac de voile 69.

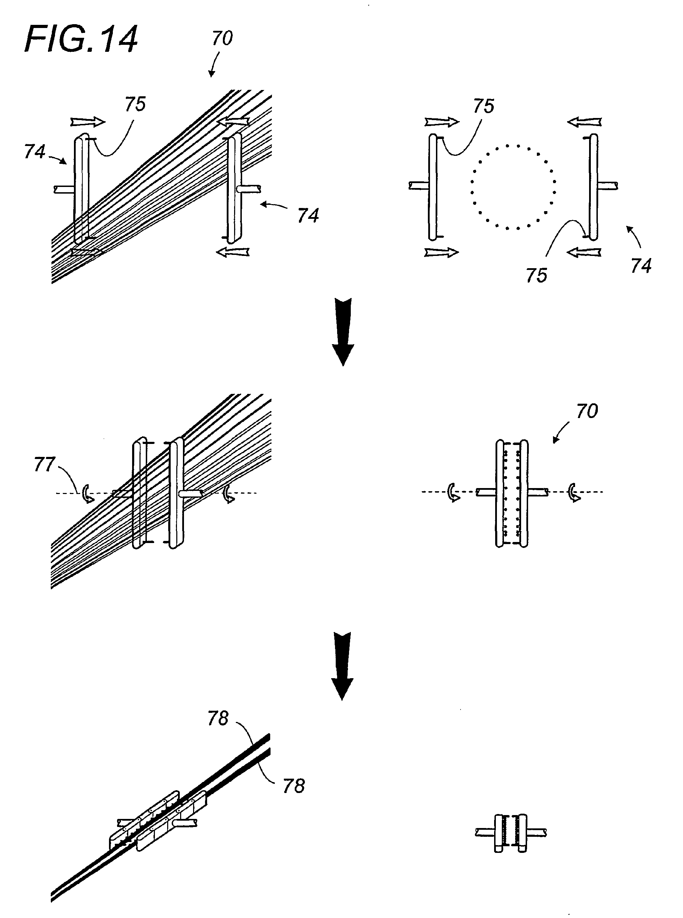

Comme représenté en perspective et de l'arrière sur la figure 14, la distribution circulaire des suspentes 25 est d'abord transformée en distribution linéaire à l'aide de deux peignes 74 identiques situés en vis-à-vis de part et d'autre du parachute à plier 8. Ces peignes 74 comportent chacun deux doigts 75 et sont montés sur un ensemble mobile 76 permettant de les rapprocher et de les éloigner des suspentes 25 ainsi que de les faire pivoter selon un axe sensiblement horizontal et perpendiculaire à celui du parachute 8. Chacun des peignes 74 affecte une forme rectiligne verticale.

Les étapes permettant de ramener la distribution circulaire à une distribution linéaire sont représentées schématiquement sur la figure 14. Les peignes 74 en position linaire verticale se rapprochent des suspentes 25 jusqu'à se trouver à une distance très courte l'un de l'autre en vis-à-vis. Ce rapprochement doit permettre aux deux peignes 74 d'entrer en contact avec la moitié des suspentes 25 présentes de leur côté. Les suspentes 25 sont alors distribuées en deux rangées verticales sensiblement parallèles. Lorsque les suspentes sont réparties selon une distribution linéaire, elles sont réparties sur une hauteur totale d'environ 60 cm dans le cas du parachute classique.

Ensuite, les peignes 74 basculent autour de leur axe de rotation 77, selon un plan vertical parallèle à l'axe du parachute. En faisant pivoter les deux peignes 74 d'environ 80° selon leur axe 77 sensiblement horizontal et perpendiculaire à l'axe du parachute 8, les suspentes 25 sont réparties selon une distribution linéaire sur une hauteur totale d'environ 10 cm. On obtient alors deux torons de suspentes 78.

Les suspentes 25 sont ensuite éjectées des encoches 50 du disque 49 et les deux parties de celui-ci 51, 52 se referment à la manière des ailes d'un papillon. Le parachute 8 est prêt à être mis en sapin par le dispositif de mise en sapin 79.

A ce moment, la voile 12 du parachute 8 repose dans sa partie inférieure sur une table de support de voile 80 tandis que son extrémité supérieure est accrochée à l'outil d'estrope 39. Afin d'éviter un fléchissement trop important de la voile 12, au moins un rouleau de soutènement 81 de la voile est prévu pour soutenir la voile 12 entre ses deux parties d'extrémité. Cet au moins un rouleau de soutènement 81. de la voile, préférentiellement au nombre de deux, est prévu pour aider le mouvement lors de la mise en sapin en maintenant la voile dans un plan sensiblement horizontal avec une certaine souplesse, c'est-à-dire pas trop tendue avec une tension néanmoins suffisante pour le lovage.

La table de support de voile 80 et l'au moins un rouleau de soutènement 81 de la voile 12 sont prévus pour que la voile 12 repose de manière sensiblement horizontale et préférentiellement à une hauteur de 1,20 mètres par rapport au sol, qui est la hauteur de travail standard d'un opérateur.

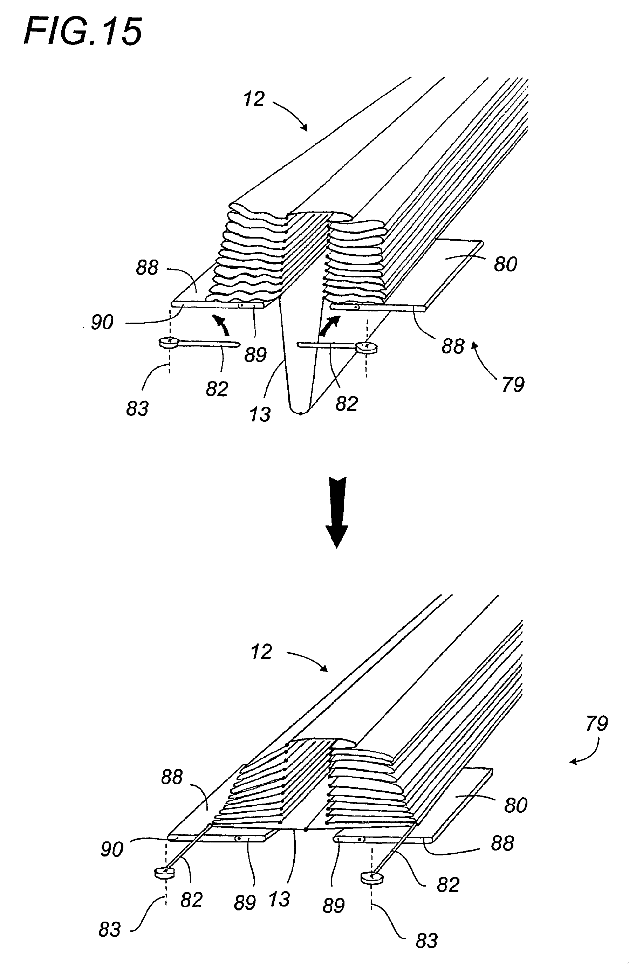

Pour la mise en sapin, un doigt sensiblement horizontal 82 monté sur un axe pivotant 83 sensiblement vertical est prévu de chaque côté au niveau de l'extrémité inférieure de la voile 12 de sorte que, lorsque l'axe sensiblement vertical pivote 83, chaque doigt sensiblement horizontal 82 s'engage entre deux suspentes 25 afin d'extraire et de tendre l'étoffe de voile 12 composant le fuseau 13 compris entre ces deux suspentes 25. Préférentiellement, ces doigts sensiblement horizontaux 82 présentent des bords sensiblement rectilignes et lisses aux coins arrondis afin de ne pas endommager la voile 12 et engagent les deux fuseaux situés au plus bas. Préférentiellement encore, ces doigts horizontaux 82 sont initialement situés dans un plan horizontal sensiblement perpendiculaire à celui des suspentes 25. Cette étape simple est représentée sur la figure 15 sur laquelle, pour plus de clarté, les suspentes 25 ne sont pas représentées.

Les fuseaux 13 ainsi mis en tension adoptent alors une forme triangulaire. Les autres fuseaux adoptant la même configuration que les deux fuseaux 13 inférieurs sous tension, le parachute 8 présente alors une forme sensiblement aplatie avec des fuseaux triangulaires 13 pliés sensiblement les uns sur les autres qui le font ressembler à un sapin. Ceci est effectué alors que la voile 12 est tendue entre l'outil d'estrope 39 et l'outil de bélière 37.

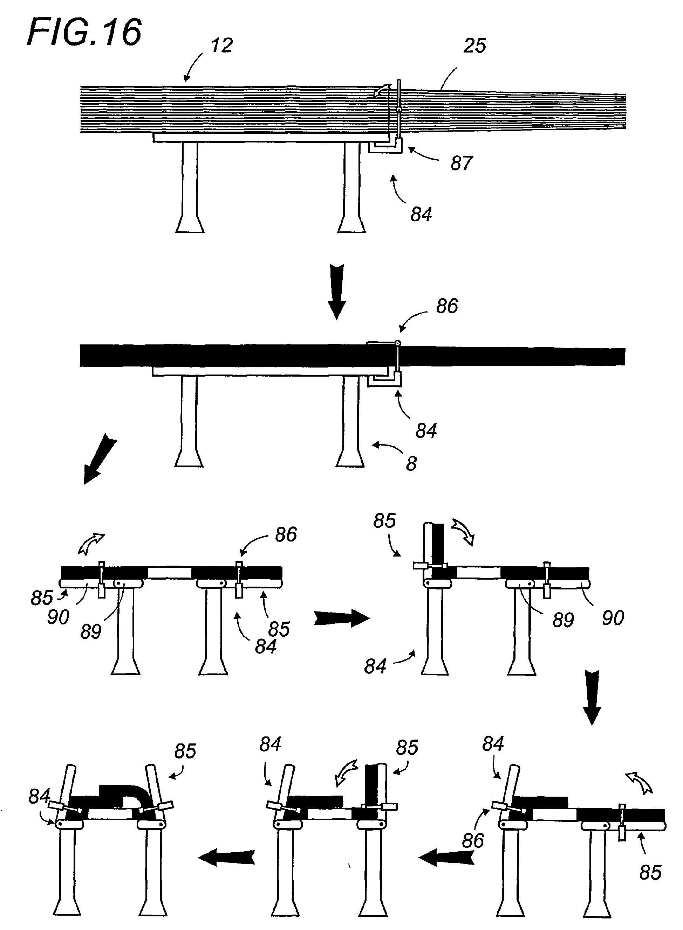

Pour la mise en portefeuille, représentée sur la figure 16, on emploie un organe de mise en portefeuille 84 qui comporte deux dispositifs de pliage des fuseaux 85. Ces dispositifs de pliage des fuseaux 85 comportent chacun une pince articulée 86 montée sur un bâti fixé 87 à la table de support de la voile 80. Chacune des pinces 86 est montée à proximité du bord orienté du côté bélière de la table de support de la voile 80.

Pour la mise en portefeuille du parachute, les pinces 86 du dispositif de mise en portefeuille 84 se replient en direction de la table de support de voile 80 afin de se positionner au-dessus de la voile 12. Les pinces 86 continuent ce mouvement jusqu'à plaquer la voile 12 contre la table de support de voile 80. Préférentiellement, chaque pince 86 se rabat pour plaquer les fuseaux 13 sur la table de support de voile 80 sensiblement au niveau du milieu de la largeur des fuseaux 13.

La table de support de voile 80 est constituée de deux plateaux 88, chaque plateau 88 étant lui-même articulé selon un axe sensiblement parallèle à celui du parachute 12. La partie articulée interne 89 de chaque plateau articulé 88 (c'est-à-dire la partie située vers l'axe central du parachute) reste immobile tandis que la partie articulée externe 90 de chaque plateau articulé 88 (c'est-à-dire la partie située vers les bords du parachute) peut se replier à environ 120 degrés.

A l'aide de ces plateaux articulés 88, la mise en portefeuille se poursuit en quatre étapes principales. Au cours de ces étapes où les plateaux 88 vont se replier autour de leur articulation, les fuseaux 13 de voile 12 resteront plaqués contre la table de support de voile 80 à l'aide des pinces 86 précédemment décrites.

Dans une première étape, un premier plateau 88 s'articule à 90 degrés en direction du bord opposé. Les fuseaux 13 situés du côté de ce plateau 88 se retrouvent alors dans une position verticale. N'étant retenus par la pince 86 que par leur milieu, les fuseaux 13 se replient alors dans leur longueur par gravité au niveau de la pince 86 et donc de leur milieu.

Dans une seconde étape, le premier plateau 80 continue de s'articuler afin de se retrouver à environ 120 degrés. Les fuseaux 13 situés du côté de ce plateau 80 se retrouvent alors pliés en deux dans le sens de la longueur.

Les deux étapes suivantes sont similaires aux deux premières et ne diffèrent qu'en ce qu'elles concernent les fuseaux 13 et le plateau 80 situés de l'autre côté.

Ainsi, au cours de la troisième étape, le second plateau 80 s'articule à 90 degrés en direction du bord opposé. Les fuseaux 13 situés du côté de ce plateau 80 se retrouvent alors dans une position verticale. N'étant retenus par la pince 86 que par leur milieu, les fuseaux 13 se replient alors par gravité au niveau de la pince 86 et donc de leur milieu, et retombent sur les fuseaux 13 précédemment pliés du côté opposé.

Le parachute 8 présente alors une forme dite en portefeuille.

On procède ensuite au lovage de la voile 12, à son introduction dans le sac de voile 69, au lovage des suspentes 13 et à leur dépôt dans les bracelets élastiques de maintien 91.

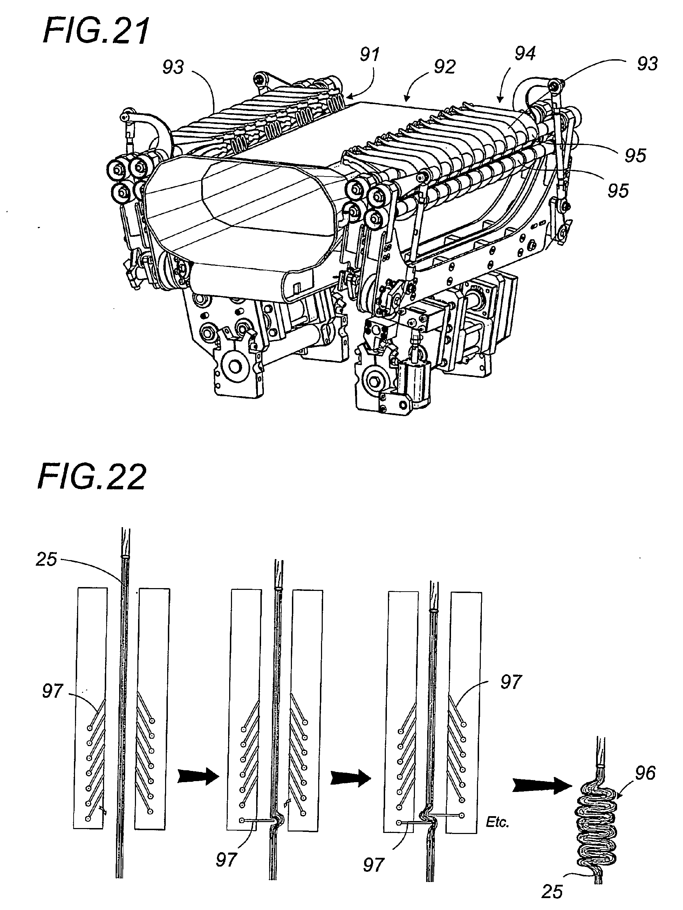

Dans un premier temps, le sac de voile 69 est d'abord placé sur un conformateur de sac de voile 92 tandis que les bracelets élastiques de maintien 91 des torons de suspentes 78 du sac de voile 69 sont accrochés sur les écarteurs 93 d'un outil manipulateur 94 des élastiques de maintien 91 qui est positionné au niveau du sac de voile 69. Cet outil manipulateur 94 représenté sur la figure 21, qui est prévu pour écarter les bracelets élastiques de maintien 91 fixés sur le dos du sac de voile, possède préférentiellement deux jeux de douze écarteurs 93 articulés sur un axe commun 95 de chaque côté de l'outil manipulateur 94 permettant d'indexer et de maintenir écartés les vingt-quatre bracelets élastiques de maintien 91 du sac de voile 69 tandis que les méandres ou loves des suspentes 96 seront ultérieurement déposées de manière coordonnée à travers ces derniers 91 par les doigts de lovage 97. L'outil manipulateur 94 des élastiques de maintien 91 et le conformateur de sac de voile 92 forment un ensemble mobile transversalement à l'axe du parachute. Ainsi, cet ensemble appelé table de mise en sac, peut être transféré latéralement afin d'être positionné sensiblement dans l'axe du parachute 8 ou au contraire d'en être écarté.

Afin de gagner du temps, la mise en place du sac de voile 69 et l'accrochage des bracelets élastiques de maintien 91 sur les écarteurs 93 de l'outil manipulateur 94 peuvent préférentiellement être effectués en même temps que la mise en portefeuille de la voile 12.

Afin d'aider la mise en sac de la voile, on utilise un conformateur de sac de voile 92 en aluminium. Ce conformateur de sac de voile 92 se présente sous la-forme d'une chemise rigide dont le profil d'ouverture est semblable à celui du sac de voile 69. Ce conformateur de sac 92 est introduit à l'entrée du sac de voile 69 sur la trajectoire d'un outil conformé en pelle 100 prévu pour pousser la voile 12 une fois lovée dans le sac de voile 69 qui est alors maintenu ouvert à l'aide du conformateur de sac 92.

En avant du conformateur de sac 92 est prévu un conformateur de lovage de voile 101 se présentant sous la forme d'une feuille rigide 98 dont les bords 99 sont repliés vers le dessus de manière à présenter un profil d'ouverture semblable à celui du sac de voile 69 et comportant des pièces latérales 102 distinctes et mobiles horizontalement et transversalement par rapport à l'axe du parachute 8 afin de pouvoir être éloignées ou rapprochées l'une de l'autre. Les deux pièces mobiles 102 de ce conformateur de lovage de voile 101 sont montées au-dessus et de part et d'autre d'une table de lovage 103. Cette table de lovage 103 est un simple plateau préférentiellement lisse prévu pour y faire reposer la voile 12 lors du lovage de celle-ci.

Pour continuer le processus de pliage du parachute, les étapes sont les suivantes.

Une canne d'estrope 104, semblable à une tige 105 sensiblement horizontale et parallèle à l'axe du parachute montée sur un montant sensiblement vertical 106 est basculée au niveau d'une articulation 107 préférentiellement située dans la partie d'extrémité inférieure du montant vertical 106. Par ce basculement, la canne d'estrope 104 se retrouve sensiblement dans l'axe du parachute 8 et sensiblement au milieu du conformateur de lovage de voile 101. Par un déplacement axial en direction des suspentes, la canne d'estrope 104 pénètre dans le sac de voile 69 ajusté sur le conformateur de sac de voile 92 par une ouverture 108 prévue dans le fond de celui-ci et son extrémité ressort de l'autre côté du sac 69 en traversant la totalité du conformateur de sac de voile 92. A son extrémité dirigée vers les bélières 30, cette canne 104 comporte un dispositif d'attache 109 préférentiellement de type mousqueton qui servira ultérieurement à l'accrochage de l'estrope 17 sur la canne d'estrope 104.

Ensuite, l'outil manipulateur 94 prévu pour écarter les bracelets élastiques de maintien 91 effectue un test des bracelets élastiques de maintien 91 en ouvrant et refermant ses deux jeux d'écarteurs 93. Ceci permet à l'opérateur de vérifier le bon positionnement des bracelets élastiques 91 sur les écarteurs 93 de l'outil manipulateur 94, ainsi que l'intégrité des bracelets élastiques 91. En cas de défaut de positionnement des bracelets élastiques 91 sur les écarteurs 93 sur l'outil manipulateur 94 il peut alors procéder aux ajustements manuels nécessaires et en cas de défaut d'intégrité pour un ou plusieurs bracelets élastiques 91, il peut le ou les changer et effectuer un nouveau test des élastiques 91 avant de valider cette étape.

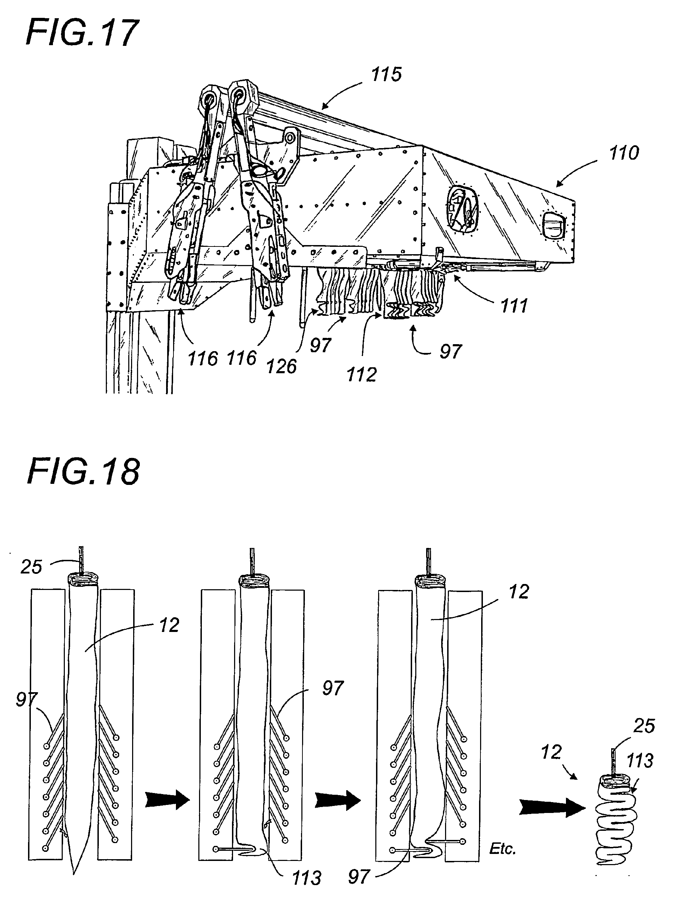

Le caisson de lovage 110 du poste de pliage-lovage 4 représenté sur la figure 17 est alors positionné au-dessus de la table de lovage 103. Ce caisson de lovage 110 comporte préférentiellement vingt doigts de lovage 97 sensiblement verticaux répartis sur deux rangées de six doigts 97 et montés sur des bras pivotants 111.

Pour continuer, les deux pièces mobiles 102 du conformateur de lovage de voile 101 sont éloignées l'une de l'autre, ce qui écarte le conformateur de lovage de voile 101 et permet le passage des doigts de lovage 97 du caisson de lovage 110.

Le lovage de la voile 12 a lieu au caisson de lovage 110 du poste de pliage-lovage 4 représenté sur la figure 17. Afin d'effectuer le lovage de la voile 12, le caisson de lovage 110 se place au-dessus de la table de lovage 103 par un mouvement descendant afin que les deux rangées de doigts de lovage 97 soient disposés de part et d'autre de la voile 12 dans le conformateur de lovage de voile 101. En commençant par l'extrémité de la voile la plus proche de l'estrope 17, les bras portant les doigts 111 sont pivotés dans un plan sensiblement horizontal et la partie rectiligne et lisse 112 des doigts de lovage 97 forme un pli 113 dans la voile. Ensuite, le bras portant le doigt de lovage suivant 111 situé sensiblement en vis-à-vis effectue la même opération dans le sens inverse, appliquant un second pli sur le pli précédent afin de former un S. Ces étapes, représentées schématiquement sur la figure 18, sont généralement répétées dix fois, conformant ainsi la voile 12 en zigzags resserrés.

Cependant, en raison des disparités de longueur de toile pouvant atteindre 25 centimètres, le nombre de loves 114 nécessaires pour lover la voile 12 peut être différent de dix. Ainsi, préférentiellement, le nombre nécessaire de doigts 97 pour le lovage est déterminé en fonction de la longueur de voile au poste de vision 3 et du type de parachute.

Dans le mode de réalisation préféré, les doigts de lovage 97 ainsi que les mouvements qu'ils effectuent sont prévus de façon que la cinématique des doigts 97 limite tout frottement avec le tissu 12 ou les suspentes 25 afin de ne pas les user ou les détériorer.

Pendant ce mouvement, le chariot ou bâti 9 supportant l'outil de bélière 37 se déplace en rapprochement de l'outil d'estrope 39 par un mouvement régulé pour accompagner le mouvement de lovage qui réduit la longueur du parachute 8 et les doigts de lovage 97 résorbent le mou alors qu'un dispositif complémentaire 115 maintient les suspentes 25 en torons 78. Ce dispositif complémentaire 115 est préférentiellement monté sur le caisson de lovage 110 et comporte préférentiellement deux pinces 116 qui vont chacune engager l'une des deux bélières 30 et se refermer dessus afin de les maintenir en position à proximité de la table de lovage 103.

En début de lovage, la voile 12 est encore accrochée à l'outil d'estrope 39, mais pendant le lovage, l'estrope 17 est désolidarisée de l'outil d'estrope 39. Elle sera ultérieurement accrochée à la canne d'estrope 104.

Pendant le lovage, préférentiellement, un élément d'obturation comportant une plaque, appelée fenêtre d'estrope, est placé contre l'ouverture du conformateur de lovage de voile 101 située côté bélière afin d'éviter que l'estrope 17 ne quitte le conformateur de lovage de voile 101. Cette fenêtre d'estrope est sensiblement verticale et perpendiculaire à l'axe du parachute 12 et peut être déplacée latéralement dans un plan vertical et perpendiculaire à l'axe du parachute 12.

Après le lovage de la voile 12, le caisson de lovage 110 se relève et les doigts de lovage 97 sont extraits des loves 114. Le caisson 110 se relève alors en position initiale et les doigts 97 du caisson de lovage 110 se remettent alors en position de départ pour le lovage ultérieur des suspentes 25.

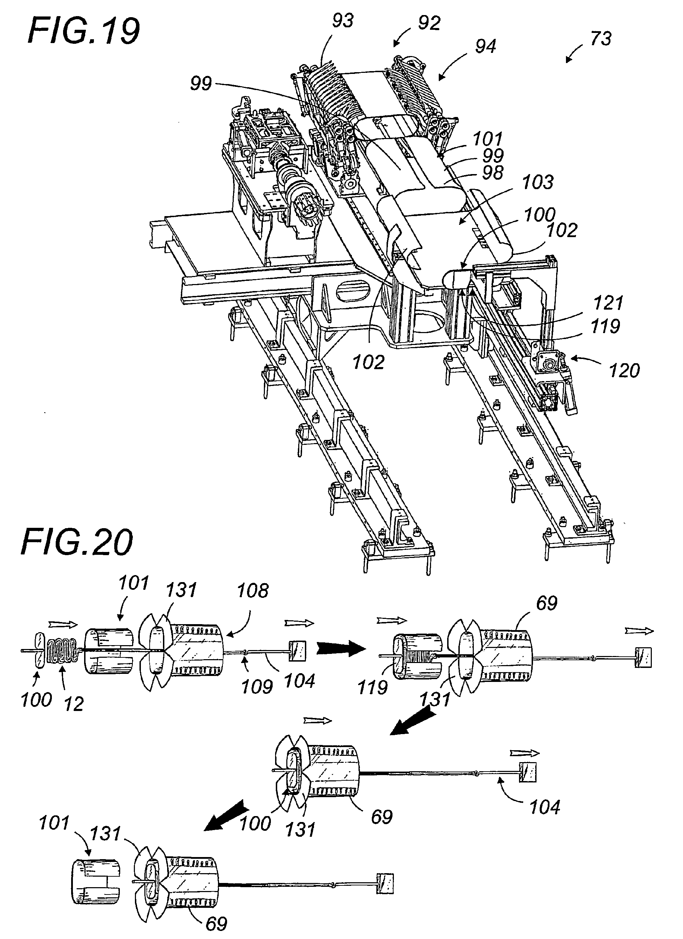

Vient ensuite l'étape de la mise en sac de la voile 12 au dispositif d'introduction de la voile 73 représenté sur la figure 19.

L'outil manipulateur 94 des élastiques de maintien 91 et le conformateur de sac de voile 92 formant la table de mise en sac sont transférés transversalement en même temps que l'outil conformé en pelle 100 afin de présenter le sac 69 dans l'alignement de l'axe du parachute 8 à la place de l'outil d'estrope 39. En effet, à ce moment, l'outil d'estrope 39 est devenu inutile car l'estrope 17 est maintenue dans le conformateur de lovage de voile 101 par la fenêtre d'estrope. A cet instant, le conformateur de lovage de voile 101 comportant la voile 12 lovée se retrouve sur l'axe du parachute 8 entre un outil conformé en pelle 100 et l'ensemble formé par le sac de voile 69, le conformateur de sac de voile 92 et l'outil manipulateur 94 des bracelets élastiques de maintien 91.

L'outil conformé en pelle 100 est monté sur un axe sensiblement horizontal et parallèle à l'axe du parachute 8 et comporte une plaque 119 sensiblement verticale et perpendiculaire à l'axe du parachute. L'axe sensiblement horizontal sur lequel est monté l'outil conformé en pelle 100 est lui-même monté sur un bâti mobile 120. Préférentiellement, la plaque sensiblement verticale 119 de l'outil conformé en pelle 100 présente une forme sensiblement ovale correspondant à la forme de l'ouverture du conformateur de sac de voile 92, avec une encoche 121 dans sa partie inférieure pour le passage des torons de suspente 78. Ainsi, l'outil conformé en pelle 100 présente la forme générale d'une paire de lunette.

A la fin du transfert de l'outil conformé en pelle 100 et de l'ensemble formé par le sac de voile 69, le conformateur de sac de voile 92 et l'outil manipulateur 94 des bracelets élastiques de maintien 91, la fenêtre d'estrope se dégage et les pièces latérales 102 du conformateur de lovage de voile 101 se resserrent afin de maintenir la voile 12 lovée.

Des dispositifs de maintien 122 des torons de suspentes 78 maintiennent alors les torons de suspente 78 au plus près de la voile 12 tandis que l'outil d'estrope 39 est transféré et l'opérateur accroche l'estrope 17 sur le mousqueton 109 de la canne d'estrope 104 qui traverse le sac de voile 69 pour prendre le relais. Pour ce faire, on diminue la tension exercée sur le parachute 8 tout en maintenant le lovage et en maintenant les torons de suspentes 78.

Les dispositifs complémentaires de maintien des suspentes 115 sont montés de chaque côté du parachute 8 et chacun de ces dispositifs complémentaires de maintien des suspentes 115 comporte deux paires de doigts 116 montées sur le caisson de lovage 110 et pouvant se refermer à la manière d'une pince. Pour le maintien des suspentes 25, les dispositifs complémentaires de maintien des suspentes 115 viennent engager les bélières 30 puis leurs doigts 116 se referment afin de pincer et maintenir fermement les suspentes 25.

De même, un dispositif mobile de maintien des torons de suspentes 122 est situé au plus près du bord d'attaque et peut se déplacer sur l'axe du parachute 8 afin de pouvoir ultérieurement maintenir la tension des suspentes 122 lors du lovage de la voile 12. Ce dernier 122 est monté sur un bâti mobile horizontalement 124 sensiblement dans l'axe du parachute 8 et comporte également deux paires de doigts 123 pouvant se refermer à la manière d'une pince.

Une fois l'estrope transférée 17 à l'extrémité de la canne d'estrope 104, l'outil conformé en pelle 100 vient se placer au niveau du bord d'attaque du sac de voile 69 au-dessus du toron de suspentes 78.

On arrive alors à l'opération de mise en sac de la voile 12 dont les étapes sont représentées sur la figure 20. L'outil conformé en pelle 100 est déplacé longitudinalement sensiblement dans l'axe du parachute 8 afin de pousser la voile 12 et de la comprimer dans le conformateur de lovage de voile 101. Cette compression est prolongée jusqu'à ce que la voile lovée 12 présente une longueur longitudinale égale à la profondeur du sac 69 dans lequel la voile 12 est destinée à être conditionnée. Lorsque la voile 12 se retrouve ainsi préférentiellement tassée au 4/5, l'outil conformé en pelle 110 continue à pousser la voile lovée 12 en direction du sac de voile 69. La voile 12 est introduite dans le conformateur de sac 92 autour duquel se trouve le sac de voile 69. En maintenant le conformateur de sac 92 et en continuant à pousser la voile lovée 12 au fond du sac de voile 69 avec l'outil conformé en pelle 100, on extrait le sac de voile 69 du conformateur de sac 92 et le sac de voile 69 ne contient alors plus que la voile lovée 12. Le sac de voile 12 repose alors sur la table de soutien 103. Afin d'accompagner le parachute 8 lors de cette étape d'introduction de la voile 12 dans le sac de voile 69, l'outil conformé en pelle 100 avance tandis que la canne d'estrope 104 recule de manière synchrone.

Une fois que la voile 12 est dans le sac de voile 69, l'opérateur ferme les quatre rabats 131 situés au bas du sac et pose un collier en matière plastique, par exemple en matière connue sous la dénomination Rilsan, après l'avoir fait passer à travers les rabats 131 qui vont fermer le sac 69 et maintenir les suspentes 25 regroupées en torons 78 à la sortie du sac de voile 69. L'opérateur pose également un collier de rupture en matière plastique entre l'estrope 17 et le sac de voile 69.

L'étape suivante consiste à lover les suspentes 25.

Le caisson de lovage 110 se positionne au-dessus de la table de lovage 103 tandis que le chariot ou bâti 9 supportant l'outil de bélière 37 se déplace en éloignement de l'outil d'estrope 39 afin de retendre les suspentes 25.

Ensuite, le dispositif complémentaire de maintien des suspentes 115 monté sur le caisson de lovage 110 engage les deux bélières 30 et se referme sur celles-ci afin de les maintenir en position au plus près du sac de voile 69, tandis que le dispositif mobile de maintien des torons de suspentes 122 se referme également sur les deux torons 78 au plus près du bord d'attaque.

Les suspentes 25 sont alors lovées par le caisson de lovage 110 tel que représenté sur la figure 22, d'une manière sensiblement similaire à celle avec laquelle la voile 12 a été lovée. Les seules différences résident dans le fait que les doigts de lovage 97 utilisés pour cette opération ne présentent pas le même écartement et ne sont pas au même nombre car le nombre de loves 129 des suspentes 25 est différent. Une autre différence réside dans le fait que pour le lovage des suspentes 25, contrairement au lovage de la voile 12, on n'utilise pas la partie rectiligne et lisse des doigts de lovage 112, mais une partie en forme de croc 126 située dans la partie inférieure des doigts de lovage 97 du côté opposé à la partie rectiligne et lisse 112.

En outre, des disparités de longueur des suspentes 25 nécessitent préférentiellement aussi une détermination du nombre nécessaire de doigts de lovage 97. A noter que la longueur des suspentes 25, qui est égale à la longueur totale mesurée au poste d'introduction 2 à laquelle on soustrait la longueur de voile 12 déterminée au poste de vision 3, donne préférentiellement aussi le positionnement du châssis de mise en sapin et de mise en portefeuille.

Dans le mode de réalisation préféré, il est prévu que le caisson de lovage 110 possède suffisamment de doigts de lovage 97 pour pouvoir être utilisé à la fois pour le lovage de la voile 12 et pour le lovage des suspentes 25. Des doigts de lovage 97 et des butées sont prévues pour s'adapter aux suspentes 25 et à l'entraxe des méandres ou loves 96 des suspentes 25.

Pendant le lovage, le ou les rouleaux de soutènement 81 sont relâchés de manière séquentielle (l'un après l'autre) en même temps que le déplacement du dispositif mobile de maintien des torons de suspentes 122 situé au plus près du bord d'attaque afin de soutenir la voile 12 pendant son lovage tout en permettant au dispositif mobile de maintien 122 de conserver une certaine tension dans les torons de suspentes 78.

Le caisson de lovage 110 est alors relevé et les bracelets élastiques de maintien 91 fixés sur le dos du sac de voile 69 sont écartés par l'outil manipulateur 94 représenté sur la figure 21. Par le mouvement d'ouverture des écarteurs 93 de l'outil manipulateur 94, les bracelets élastiques de maintien 91 sont ouverts et reculent transversalement par rapport à l'axe du parachute 8.

Le sac de voile 69 est alors positionné en-dessous du caisson de lovage 110 qui est alors redescendu. On pose ensuite les suspentes 25 au-dessus du sac de voile 69 en deux temps. On pose d'abord le mou sous un rabat du sac 69 par le passage du sac de voile 69 sous les suspentes 25 afin de présenter chaque love 129 des suspentes lovées 25 en face d'un des bracelets élastiques de maintien 91 écartés ouverts par l'outil manipulateur 94, puis les doigts de lovage 97 déposent les boucles ou extrémités des loves (méandres) 129 à travers les bracelets élastiques de maintien 91.

Pour effectuer cette dernière opération, le poste de pliage-lovage 4 comprend un outil manipulateur 94 représenté sur la figure 21 qui écarte les bracelets élastiques de maintien 91 fixés sur le dos du sac de voile 69 tandis que les doigts de lovage 97 du caisson de lovage 110 déposent les loves 129 à travers les bracelets élastiques de maintien 91. Comme on peut le voir sur la figure 21, l'outil manipulateur 94 possède des jeux d'écarteurs 93 articulés sur un axe commun 95 qui permettent d'indexer et de maintenir écartés les bracelets élastiques de maintien 91 tandis que les loves des suspentes 129 sont déposées de manière coordonnée à travers ces derniers 91 par les doigts de lovage 97.

Les écarteurs 93 sont alors relâchés afin que les bracelets élastiques de maintien 91 se referment sur les extrémités des loves des suspentes 129, puis l'écartement entre les deux rangées parallèle des doigts de lovage 97 diminue afin de relâcher les suspentes 25.

Les doigts de lovage sont alors extraits des suspentes par un mouvement de montée du caisson de lovage ou de la table de lovage. L'étape suivante consiste à extraire les écarteurs d'entre les bracelets élastiques tout en conservant les extrémités des loves de suspentes en place.

Pour cela, l'écartement des deux rangées de doigt de lovage est ajusté afin d'obtenir une distance entre les deux rangées supérieures à l'écartement des bracelets élastiques.

Le caisson de lovage 38 descend alors et les dos des doigts de lovage viennent se positionner derrière les bracelets élastiques qui enserrent les loves de suspentes et les empêchent de s'échapper.

Enfin, les écarteurs 93 de l'outil manipulateur 94 sont dégagés des loves de suspente 129 respectivement par un mouvement d'éloignement des deux rangées d'écarteurs 93. Au cours de ce mouvement les bracelets élastiques 91 maintenus par le dos des doigts de lovage restent en place et confortent leur serrage des loves de suspentes. Le caisson de lovage remonte alors et permet à l'opérateur d'accéder au sac.

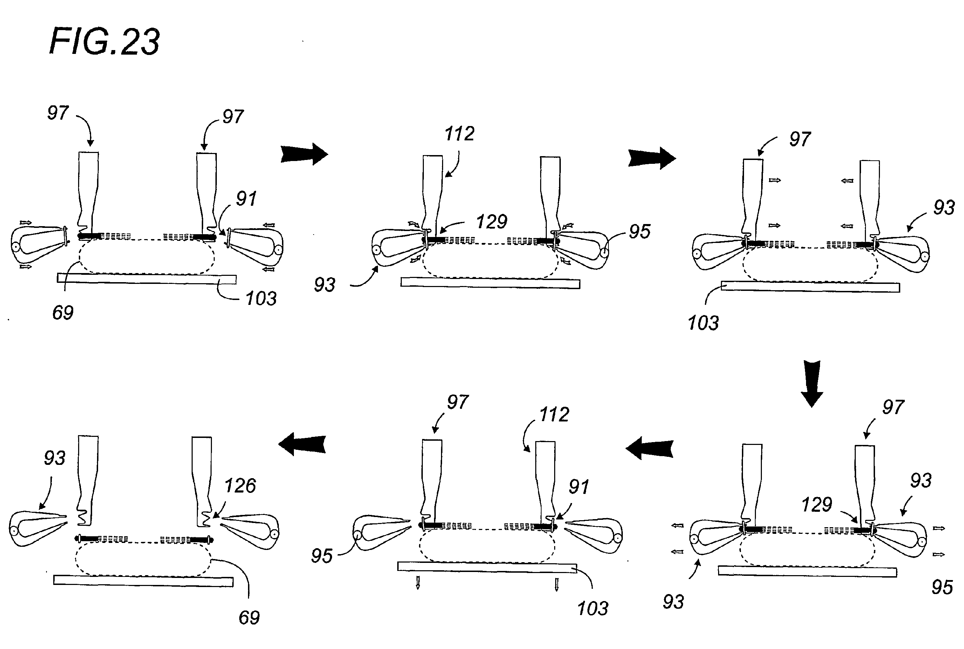

Ces dernières étapes sont représentées schématiquement sur la figure 23 où ne sont représentés que deux doigts de lovage 97 en vis-à-vis et leurs loves de suspentes respectives 129.

L'opérateur ajuste alors les loves 129 dans les bracelets élastiques 91 et met en place un conformateur de bélière 130 sur le sac 69 puis retire l'ensemble du poste de travail.

Le processus peut être préférentiellement validé par l'opérateur.

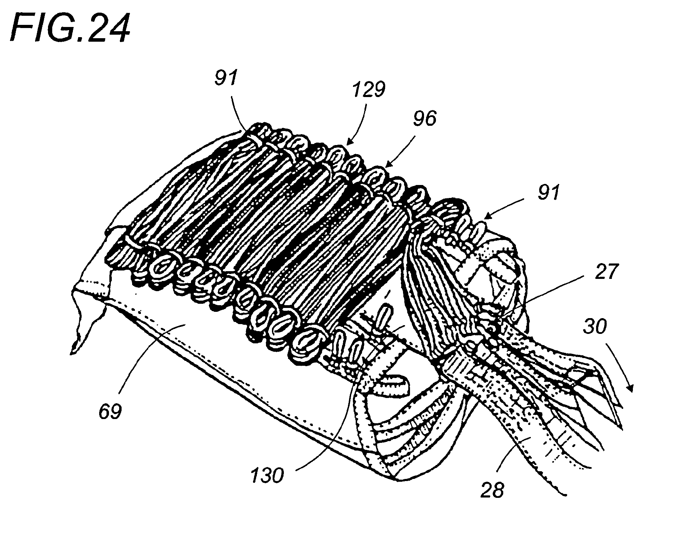

Le parachute 8 se trouve plié et conditionné dans un sac de voile 69 tel que représenté sur la figure 24, ce sac de voile 69 étant prêt à être introduit dans un sac dorsal (non représenté) pour être porté par le parachutiste.

L'invention n'est pas limitée au mode de réalisation précédemment décrit et représenté sur les dessins, mais peut présenter des modifications sans s'écarter du concept inventif tel que définit dans les revendications. Ainsi, moyennant quelques modifications évidentes pour l'homme du métier, il peut être envisagé d'adapter l'invention au pliage d'autres types de parachutes, de parapentes ou d'autres dispositifs similaires. De plus, l'ordre, la combinaison et la fonctionnalité de certaines étapes du procédé de pliage et de conditionnement automatiques de parachutes précédemment décrites peuvent être modifiés sans s'écarter du concept inventif de l'invention tel que définit dans les revendications. En outre, certains dispositifs de l'invention ont parfois pour particularité d'être capables d'effectuer plusieurs tâches, ceci dans un but d'économie de coût et d'espace, mais il peut être envisagé de multiplier le nombre de dispositifs en n'attribuant par exemple qu'une seule tâche par dispositif. Enfin, le mode de réalisation préféré décrit précédemment est automatisé et nécessite la présence d'un opérateur pour certaines tâches. Il peut néanmoins être envisagé d'automatiser totalement un ou plusieurs postes de la machine d'inspection, de pliage et de conditionnement automatiques de parachutes, ou au contraire de multiplier les étapes manuelles et les étapes de validations par l'opérateur.

Il doit également être noté que la machine selon l'invention, destinée à être construite dans un local de taille réduite, a été prévue afin d'occuper le moins d'espace possible. Si plus d'espace est disponible pour cette dernière, de nombreux éléments constitutifs de la machine pourront être conçus, placés et/ou fabriqués différemment par l'homme du métier, sans pour autant s'écarter du concept inventif de l'invention et de la portée des revendications en annexe.

La présente invention reste entière si pour des raisons de cadence et donc de productivité un des postes est doublé voire plusieurs postes sont doublés.

## Revendications

1. Machine automatisée d'inspection, de pliage et de conditionnement de parachutes (1), **caractérisée en ce qu'**elle comprend les unités fonctionnelles suivantes :
. un poste d'introduction (2) réalisant une identification de la voilure et une mise en référence pour la suite des opérations, ce poste comportant un outil d'estrope (39) et un outil de bélière (37) formant un ensemble solidaire lorsqu'ils supportent le parachute (8) pour les phases ultérieures ;
. un poste de vision (3) conformant la voilure de manière à présenter chaque couple de deux fuseaux successifs des vingt-quatre fuseaux (13) devant un ensemble de vision (58) ;
. un poste de pliage-lovage (4) où la voile (12) est pliée en position "sapin" puis en position "portefeuille" avant d'être lovée et mise dans le sac de voile, et où les suspentes (25) sont lovés et les loves des suspentes (96) sont ajustées dans des bracelets élastiques de maintien (91) ; et
. un portique de transfert (5) comportant un organe de levage bélière (6) et un organe de levage estrope (7), et transportant la voilure d'un poste à l'autre.

2. Machine selon la revendication 1, **caractérisée en ce que** le poste automatisé d'introduction (2) réalisant une identification et une mise en référence de la voilure, comprend les moyens suivants :
. un bac de réception (36) du parachute (8) ;
. un outil d'estrope (39) sur lequel est accrochée l'estrope de cheminée (17) du parachute (8) ; et
. un outil de bélière (37) sur lequel est accrochée la bélière (30) du parachute (8) ;
le bac (36) étant situé entre ces deux outils (37, 39) et l'outil d'estrope (39) et l'outil de bélière (37) formant un ensemble solidaire avec le parachute (8) pour les phases ultérieures.

3. Machine selon l'une quelconque des revendications précédentes, **caractérisée en ce que** l'outil de bélière (37) du poste automatisé d'introduction (2) est fixé sur une table d'indexation (38), **en ce qu'**il comporte un arbre mobile en pivotement (46) sur lequel sont montés deux dispositifs de fixation des bélières (47, 48) en vis-à-vis par rapport à l'axe de cet arbre (46), **en ce qu'**il comporte à l'une de ses extrémités un support de dévrillage de voilure sous la forme d'un disque (49), et **en ce que** l'extrémité de l'outil de bélière (37) du poste automatisé d'introduction (2) la plus éloignée du parachute (8) est montée à coulissement indexé sur un support amovible fixé au sol (53) et pouvant être saisi et déplacé par un organe de levage bélière (6) du portique de transfert (5).

4. Machine selon la revendication précédente, **caractérisée en ce que** le disque de dévrillage de voilure (49) du poste automatisé d'introduction (2) se compose de deux demi-disques (51, 52) articulés entre eux pour qu'il puisse se replier sur lui-même à la manière des ailes d'un papillon et **en ce qu'**il présente autant d'encoches (50) que de suspentes réparties de manière sensiblement équidistantes sur son pourtour, ces encoches (50) étant destinées à recevoir à immobilisation chacune des suspentes (25) du parachute distribuées angulairement en faisceau selon un axe perpendiculaire à la surface du disque (49) et sensiblement parallèle à celui des encoches (50) et de l'arbre de l'outil de bélière (46).

5. Machine selon l'une quelconque des revendications 1 à 4, **caractérisée en ce qu'**un mécanisme de rattrapage (54) monté sur un chariot mobile en coulissement linéaire (55) est prévu sur l'outil de bélière (37) du poste automatisé d'introduction (2).

6. Machine selon l'une quelconque des revendications 1 à 5, **caractérisée en ce que** l'outil d'estrope (39) comporte à l'une de ses extrémités un arbre mobile en pivotement (41) à l'extrémité duquel se trouve un crochet d'accrochage (42) et autant de doigts appelés doigts d'estrope (43) que de rubans (45) des fuseaux (13) du parachute (8) pour l'introduction des rubans (45) entre les doigts d'estrope (43) et **en ce que** l'extrémité de l'outil d'estrope (39) la plus éloignée du parachute (8) est solidaire d'un support amovible mobile (44) selon l'axe de l'arbre mobile (41) et pouvant être saisi et déplacé par l'organe de levage estrope (7) du portique de transfert (5).

7. Machine selon l'une quelconque des revendications 3 à 6, **caractérisée en ce que** les moteurs actionnant en pivotement l'arbre (46) de l'outil de bélière (37) et l'arbre (41) de l'outil d'estrope (39) sont parfaitement synchrones en mouvement et que ces arbres (41, 46) sont situés sur le même axe géométrique de pivotement.

8. Machine selon l'une quelconque des revendications 1 à 7, **caractérisée en ce que** le poste automatisé de vision (4) conformant la voilure de manière à présenter chaque couple de deux fuseaux successifs des vingt-quatre fuseaux (13) devant un ensemble de vision (58) comprend les moyens suivants :
. un conformateur de vision (57) ;
. un ensemble de vision (58) ; et
. un dispositif d'éclairage spécifique (60).

9. Machine selon la revendication précédente, **caractérisée en ce que** le conformateur de vision (57) est mobile et prévu pour s'avancer et s'insérer à l'intérieur de la voile (12) entre deux fuseaux successifs (13), sensiblement au milieu de celle-ci et en qu'il comporte au niveau de sa partie supérieure un dispositif de basculement (62) comprenant une poulie ou un galet (63), actionné par un vérin (64) monté sur un axe pivotant (65), prévu pour que lors du soulèvement du conformateur de vision (57), ce galet (63) saisisse la suspente supérieure et la soulève, ce qui permet de soulever une partie de la voile (12) par cette suspente (25) et de présenter les deux fuseaux (13) adjacents à l'ensemble de vision (58).

10. Machine selon la revendication précédente, **caractérisée en ce que** lors d'une prise d'image, la poulie ou galet (63) du dispositif de basculement (62) du conformateur de vision (57) pivote d'une dizaine de degrés selon un axe sensiblement horizontal situé sensiblement dans l'axe du parachute (8) afin de présenter la totalité d'un des deux panneaux (14) examinés aux capteurs d'images (59) de l'ensemble de vision (58) situés de son côté.

11. Machine selon l'une quelconque des revendications 8 à 10, **caractérisée en ce que** l'ensemble de vision (58) est une unité à image numérisée comportant plusieurs rangées de capteurs d'images (59) situées de part et d'autre de la voile (12) lorsque celle-ci est en place au poste de vision (3).

12. Machine selon l'une quelconque des revendications 8 à 11, **caractérisée en ce que** le dispositif d'éclairage spécifique (60) comprend une rampe lumineuse de diodes électroluminescentes (61) et **en ce qu'**il est situé à l'intérieur de la voile (12) lorsque celle-ci est en place au poste de vision (3).

13. Machine selon l'une quelconque des revendications 8 à 12, **caractérisée en ce que** les images prises au poste de vision (3) sont traitées par des moyens informatiques qui permettent d'en déduire la présence de défauts dans la voile (12), dans les filets (22) et dans les suspentes (25).

14. Machine selon l'une quelconque des revendications précédentes, **caractérisée en ce que** les organes de levage (6, 7) du portique de transfert (5) sont mobiles de préférence simultanément.

15. Machine selon l'une quelconque des revendications précédentes, **caractérisée en ce que** le poste de pliage-lovage (4) dans lequel la voile (12) est pliée, lovée et mise dans le sac de voile (69), et dans lequel des suspentes (25) sont lovées, les loves des suspentes (96) étant ajustées dans des bracelets élastiques de maintien (91) comprend les unités automatiques suivantes :
. un ensemble de distribution linéaire des suspentes (70) ;
. un ensemble de pliage (71) ;
. un ensemble de lovage (72) ; et
. un ensemble d'introduction du parachute dans le sac de voile (73).

16. Machine selon la revendication précédente, **caractérisée en ce que** l'ensemble de distribution linéaire des suspentes (70) comprend deux peignes (74) situés en vis-à-vis de part et d'autre du parachute à plier (8), prévus pour transformer la distribution circulaire des suspentes (25) en distribution linéaire, et **en ce que** les peignes (74) comportent chacun deux doigts (75) et sont montés sur un ensemble mobile (76) permettant de les rapprocher et de les éloigner des suspentes (25) ainsi que de les faire pivoter selon un axe sensiblement horizontal et perpendiculaire à celui du parachute (8).

17. Machine selon l'une quelconque des revendications précédentes, **caractérisée en ce que** le poste de pliage-lovage (4) comprend en outre une table de support de voile (80) prévue pour recevoir la voile (12) du parachute (8), cette table de support de voile (80) comprenant deux plateaux (88), chaque plateau (88) étant lui-même articulé selon un axe sensiblement parallèle à celui du parachute (8) de façon que la partie articulée interne (89) de chaque plateau articulé (88) puisse rester immobile alors que la partie articulée externe (89) de chaque plateau articulé (88) peut se replier à environ 120 degrés, et **en ce que** le poste de pliage-lovage (4) comprend en outre au moins un rouleau de soutènement (81) de la voile, préférentiellement deux, prévu(s) pour soutenir la voile.

18. Machine selon l'une quelconque des revendications 15 à 17, **caractérisée en ce que** l'ensemble de pliage (71) comprend un doigt sensiblement horizontal (82) monté sur un axe pivotant sensiblement vertical (83) prévu de chaque côté au niveau de l'extrémité inférieure de la voile (12) de sorte que, lorsque l'axe vertical (83) pivote, chaque doigt sensiblement horizontal (82) s'engage entre deux suspentes (25) afin d'extraire et de tendre l'étoffe de voile (12) composant le fuseau (13) compris entre ces deux suspentes (25).

19. Machine selon l'une quelconque des revendications 15 à 18, **caractérisée en ce que** l'ensemble de pliage comprend un organe de mise en portefeuille (84) comprenant deux dispositifs de pliage des fuseaux (85) qui comportent chacun une pince articulée (86) montée sur un bâti (87) fixé à la table de support de la voile (80), chacune des pinces étant montée à proximité du bord orienté du côté bélière de la table de support de la voile (80), et **en ce qu'**au moins une des pinces (86) des dispositifs de pliage des fuseaux (85) est prévue pour se rabattre afin de plaquer les fuseaux (13) sur la table de support de voile (80) sensiblement au niveau du milieu de la largeur des fuseaux (13) et **en ce que** les pinces (86) des dispositifs de pliage des fuseaux (85) coopèrent avec les plateaux articulés (88) de la table de support de voile (80) afin de plier le parachute (8) de sorte qu'il présente une forme dite en portefeuille.

20. Machine selon l'une quelconque des revendications 15 à 19, **caractérisée en ce que** l'ensemble de lovage (72) comprend les moyens suivants :
. une table de lovage (103) ;
. un conformateur de lovage de voile (101) ;
. un caisson de lovage (110) ; et
. un dispositif complémentaire de maintien des suspentes (115) prévu pour maintenir les suspentes (25) lors du lovage de la voile (12).

21. Machine selon la revendication précédente, **caractérisée en ce que** le conformateur de lovage de voile (101) se présente sous la forme d'une feuille rigide (98) dont les bords (99) sont repliés sur le dessus, et de pièces latérales (102) distinctes et mobiles horizontalement et transversalement par rapport à l'axe du parachute (8) afin de pouvoir être éloignées ou rapprochées l'une de l'autre, et **en ce que** le conformateur de lovage de voile (101) comprend un élément d'obturation comportant une plaque, appelée fenêtre d'estrope, qui peut être placée contre l'ouverture du conformateur de lovage de voile (101) située côté bélière afin d'éviter à l'estrope (17) de quitter le conformateur de lovage de voile (101).

22. Machine selon la revendication 20 ou 21, **caractérisée en ce que** le caisson de lovage (110) comporte des doigts de lovage (97) et **en ce que** les pièces latérales (102) du conformateur de lovage de voile (101) peuvent s'écarter afin de faciliter l'entrée des doigts de lovage (97) du caisson de lovage (110) et/ou se resserrer afin de maintenir la voile (12) une fois lovée.

23. Machine selon l'une quelconque des revendications 20 à 22, **caractérisée en ce que** le caisson de lovage (110) est prévu pour lover à la fois la voile (12) et les suspentes (25), **en ce qu'**il possède suffisamment de doigts de lovage (97) pour pouvoir être utilisé à la fois pour le lovage de la voile (12) et pour le lovage des suspentes (25) et **en ce que** le nombre de doigts de lovage (97) du caisson de lovage (110) utilisé pour le lovage de la voile (12) et des suspentes (25) est déterminé en fonction de la longueur de la voile (12) et/ou des suspentes (25).

24. Machine selon l'une quelconque des revendications 20 à 23, **caractérisée en ce que** le caisson de lovage (110) comporte des doigts de lovage sensiblement verticaux (97) répartis sur deux rangées et montés sur des bras pivotants (111) prévus pour pouvoir pivoter dans un plan sensiblement horizontal afin que les doigts de lovage (97) puissent former chacun un pli (113) dans la voile (12), et **caractérisée en ce que** le caisson de lovage (110) est mobile afin de pouvoir se placer au-dessus de la table de lovage (103) de sorte que les rangées de doigts de lovage (97) du caisson de lovage (110) soient disposées de part et d'autre de la voile (12) ou des suspentes (25) à lover

25. Machine selon l'une quelconque des revendications 22 à 24, **caractérisée en ce que** les doigts de lovage (97) du caisson de lovage (110) présentent une partie rectiligne et lisse (112) servant au lovage de la voile (12) et une autre partie en forme de croc (126) servant au lovage des suspentes (25) et située dans la partie inférieure des doigts de lovage (97) du côté opposé à la partie rectiligne et lisse (112).

26. Machine selon l'une quelconque des revendications 20 à 25, **caractérisée en ce que** le dispositif complémentaire de maintien des suspentes (115) comprend deux pinces (116) prévues pour engager chacune l'une des deux bélières (30) et se refermer dessus afin de les maintenir en position.

27. Machine selon l'une quelconque des revendications précédentes, **caractérisée en ce que** le poste de pliage-lovage (4) comprend en outre un dispositif mobile de maintien des torons de suspentes (122) prévu pour se déplacer sur l'axe du parachute (8) afin de pouvoir maintenir la tension des suspentes (25) lors du lovage de la voile (12).

28. Machine selon l'une quelconque des revendications 15 à 27, **caractérisée en ce que** l'ensemble d'introduction du parachute dans le sac de voile (73) comprend les sous-ensembles suivants :
. un conformateur de sac de voile (92) ;
. un outil manipulateur des élastiques de maintien (94) comportant des écarteurs (93) prévus pour écarter les bracelets élastiques de maintien (91) fixés sur le dos du sac de voile (69) ;
. un outil conformé en pelle (100) prévu pour pousser la voile (12) une fois lovée dans le sac de voile (69) ;
. une canne d'estrope (104).

29. Machine selon la revendication précédente, **caractérisée en ce que** le conformateur de sac de voile (92) se présente sous la forme d'une chemise rigide dont le profil d'ouverture est semblable à celui du sac de voile (69).

30. Machine selon l'une quelconque des revendications 28 ou 29, **caractérisée en ce que** l'outil manipulateur des élastiques de maintien (94) comporte des jeux d'écarteurs (93) articulés sur un axe commun (95) de chaque côté de l'outil manipulateur (94) qui permettent d'indexer et de maintenir écartés les bracelets élastiques de maintien (91) du sac de voile (69).

31. Machine selon la revendication 25 et l'une quelconque des revendications 28 à 30, **caractérisée en ce que** la partie en forme de croc (126) des doigts de lovage (97) du caisson de lovage (110) est conformée pour que les bracelets élastiques de maintien (91) quittent les doigts de lovage (97) et restent sur les loves des suspentes (96) lorsque les écarteurs (93) de l'outil manipulateur (94) sont dégagés des loves (96).

32. Machine selon la revendication 22 et l'une quelconque des revendications 28 à 31, **caractérisée en ce que** les jeux d'écarteurs (93) de l'outil manipulateur des élastiques de maintien (94) sont prévus pour maintenir écartés les bracelets élastiques de maintien (91) tandis que les loves des suspentes (96) sont déposées de manière coordonnée à travers ceux-ci par les doigts de lovage (97).

33. Machine selon la revendication 20 et l'une quelconque des revendications 28 à 32, **caractérisée en ce que** l'outil conformé en pelle (100) est monté sur un axe sensiblement horizontal et parallèle à l'axe du parachute (8) et comporte une plaque sensiblement verticale (119) et perpendiculaire à l'axe du parachute (8) ainsi que des moyens pour se déplacer longitudinalement sensiblement dans l'axe du parachute (8) afin de pousser la voile (12) et de la comprimer dans le conformateur de lovage de voile (101), puis de pousser la voile (12) lovée en direction du sac de voile (69) pour l'introduire dans le conformateur de sac de voile (92).

34. Machine selon l'une quelconque des revendications 28 à 33, **caractérisée en ce que** la canne d'estrope (104) est une tige sensiblement horizontale et parallèle à l'axe du parachute (8) qui comporte un dispositif d'attache (109) en son extrémité dirigée vers les bélières (30), ce dispositif d'attache (109) étant préférentiellement de type mousqueton pour l'accrochage de l'estrope (17) sur la canne d'estrope (104), et **en ce qu'**elle comporte des moyens pour se déplacer axialement en direction des suspentes (96), pour qu'elle puisse pénétrer dans le sac de voile (69) ajusté sur le conformateur de sac de voile (92) par une ouverture (108) prévue dans le fond de celui-ci et que son extrémité ressorte de l'autre côté du sac (69) en traversant la totalité du conformateur de sac de voile (92).

35. Machine selon l'une quelconque des revendications 28 à 34, **caractérisée en ce que** la canne d'estrope (104) est prévue pour reculer de manière synchrone tandis que l'outil conformé en pelle (100) avance afin d'accompagner le parachute (8) lors de l'étape d'introduction de la voile (12) dans le sac de voile (69).

## Claims

1. An automatic parachute inspection, folding and packaging machine (1) **characterised by** the fact that it comprises the following functional units:
. an inserting station, where the canopy is identified and given a reference for the rest of the operations, this station comprising a strop tool (39) and a shackle (37), forming a single assembly when they support the parachute for the subsequent stages;
. a viewing station (3) where the canopy is shaped so as to present each pair of successive gores of the 24 gores (13) in total to a viewing assembly (58).
. a folding-coiling station (4) where the canopy (12) is folded in the "fir tree" position and then in the "wallet" position before being coiled and placed in the cloth bag, and where the suspension lines (25) are coiled and the coils of suspension lines (96) are fitted through the elastic bracelets (91) ; and
. a transfer gantry (5) comprising a shackle lifting device (6) and a strop lifting device (7) carrying the canopy from one station to another.

2. Machine according to claim 1, **characterised by** the fact that the automatic insertion station (2) which identifies and references the canopy comprises the following elements:
. a parachute (8) receiving tray (36)
. a strop tool (39) to which is attached the parachute (8) apex vent strop (17); and
. a shackle tool (37) to which is attached the parachute (8) shackle (30);
the tray (36) being located between these two tools (37,39) and the strop tool (39) and the shackle tool (37) forming an assembly with the parachute (8) for the later stages.

3. Machine according any one of previous claims, **characterised by** the fact that the shackle tool (37) on the automatic insertion station in (2) is fixed to an indexing table (38), which comprises a mobile pivoting shaft (46) to which are mounted two shackle fixing devices (47,48) opposite each other with respect to the centreline of this shaft (46) a canopy untwisting device in the form of a disk (49) on one of its extremities, and with the end of the shackle tool (37) on the insertion station (2) the furthest from the parachute (8) is fitted as a sliding index on a movable support fixed to the ground (53) and which can be taken and moved by a shackle lifting device (6) which is on the transfer gantry (5).

4. Machine according to the previous claim **characterised by** the fact that the canopy untwisting disk (49) on the automatic insertion station (2) is composed of two half discs (51,52) arranged so that they can fold together like the wings of a butterfly and with as many slots (50) as there are suspension lines placed equidistant around the edge, the slots (50) being designed to receive the parachute suspension lines (25) distributed angularly in a bundle along an axis perpendicular to the surface of the disk (49) and parallel to that of the slots (50) and the shackle tool shaft (46).

5. Machine according any one of claims 1 to 4, **characterised by** the fact that a recovery mechanism (54) mounted on a linear sliding carriage (55) is provided on the shackle tool (37) on the automatic insertion station (2).

6. Machine according any one of claims 1 to 5, **characterised by** the fact that the strop tool (39) has a mobile pivoting shaft at one of its ends (41) on the end of which is a hook (42) and as many strop claws (43) as there are parachute (8) gore (13) tapes (45) which claws are designed for insertion of the tapes (45) between the strop claws (43) and in which the end of the strop tool (39) the farthest from the parachute (8) is fixed to a mobile support (44) aligned along the axis of the mobile shaft (41) which can be taken and moved by the transfer gantry (5) strop lifting device (7).

7. Machine in accordance with any one of claims 3 to 6, **characterised by** the fact that the motors driving the pivoting of the shaft (46) of the shackle tool (37) and the shaft (41) of the strop tool (39) are perfectly synchronous in movement and that these shafts (41,46) are located on the same geometrical pivoting axis.

8. Machine in accordance with any one of claims 1 to 7, **characterised by** the fact that the viewing station (4) where the canopy is shaped so as to present each pair of successive gores of the 24 gores (13) in total to a viewing assembly (58) is composed of the following elements :
. A viewing shaper (57)
. A viewing assembly (58) ; and
. a specific lighting device (60).

9. Machine in accordance with the previous claim, **characterised by** the fact that the viewing shaper (57) is mobile and designed to advance and insert itself inside the canopy (12) between two consecutive gores (13) in the middle of the canopy and that its top part has a tilting device (62) comprising a pulley or a wheel (63) driven by an actuator (64) mounted on a pivoting shaft (65) so that when the viewing shaper (57) is raised, this wheel (63) takes the top suspension line and raises it which enables part of the canopy (12) to be raised by this suspension line (25) and the two adjacent gores (13) to be presented to the viewing assembly (58).

10. Machine in accordance with the previous claim in which when an image is recorded, the wheel 63 on the tilting device (62) on the viewing shaper(57) pivots by about ten degrees along a horizontal axis along the centreline of the parachute (8) so as to present the whole of one of the two sections (14) examined by the image sensors (59) located on its side.

11. Machine in accordance with one of claims 8 to 10, **characterised by** the fact that the viewing assembly (58) is a digital imaging unit comprising several rows of image sensors (59) located either side of the canopy (12) when the canopy is in place on the viewing station (3).

12. Machine in accordance with one of claims 8 to 11, **characterised by** the fact that the specific lighting device (60) comprises a rail of LEDs (61) and that it is located inside the canopy (12) when the canopy is in place on the viewing station (3).

13. Machine in accordance with one of claims 8 to 12, **characterised by** the fact that the images recorded at the viewing station (3) are processed by a computer which enables the detection of any faults in the parachute (12), in the nets (22) and in the suspension lines (25).

14. Machine in accordance with one of the previous claims **characterised by** the fact that the lifting devices (6,7) on the transfer gantry (5) are mobile and preferably simultaneously.

15. Machine in accordance with one of the previous claims, **characterised by** the fact that the folding-coiling station (4) is in which the parachute (12) is folded, coiled and inserted into the cloth bag (69), and in which the suspension lines (25) are coiled, the suspension line coils (96) being adjusted in elastic bracelets (91) includes the following automatic units :
. a linear suspension line distribution assembly (70) ;
. A folding assembly (71) ;
. A coiling assembly (72) ; and
. an assembly for insertion of the parachute into the cloth bag (73).

16. Machine in accordance with the previous claim, **characterised by** the fact that the suspension line distribution assembly (70) has two combs (74) located opposite each other either side of the parachute to be folded (8), designed to convert the circular distribution of the suspension lines (25) to a linear distribution, the combs (74) each having two claws (75) and are mounted on a mobile assembly (76) enabling them to be brought towards or away from the suspension lines (25) and to pivot them in a horizontal axis perpendicular to that of the parachute (8).

17. Machine in accordance with one of the previous claims, **characterised by** the fact that the folding-coiling station (4) designed to receive the parachute (8) the canopy (12) includes in addition a canopy support table (80) this table comprising two plates (88), each plate (88) being itself articulated around and axis parallel to that of the parachute (8) such that the internal articulated part (89) of each articulated plate (88) can remain a mobile while the external articulated part (89) of each articulated plate (88) can folded back by 120° and the folding-coiling station (4) includes in addition at least one support roller (81) for the canopy, and preferably two to support the canopy.

18. Machine in accordance with one of claims 15 to 17, **characterised by** the fact that the folding assembly (71) includes a horizontal claw (82) mounted on a vertical pivoting shaft (83) on each side at the lower extremity of the canopy (12) such that when the vertical shaft (83) pivots, each horizontal claw (82) is engaged between two suspension lines (25) in order to extract and tighten the cloth of the canopy (12) composing the gore (13) between these two suspension lines (25).

19. Machine in accordance with one of claims 15 to 18, **characterised by** the fact that the folding assembly includes a wallet configuring device (84) comprising two gore folding devices (85) which each include an articulated gripper (86) mounted on a housing (87) 62 the canopy support table (80) each of the grippers being mounted near the shackle side edge of the canopy support table (80), and at least one of these grippers (86) on the gore folding devices (85) is designed to fold back so as to clamp the gores (13) on the canopy support table (80) in the middle of the width of the gores (13) and such that the grippers (86) on the gore folding devices (85) work together with the canopy support table (80) articulated plates (88) so as to fold the parachute (8) such that it presents a shape known as wallet shape.

20. Machine according any one of claims 15 to 19, **characterised by** the fact that the coiling assembly (72) comprising the following :
. A coiling table (103) ;
. A canopy coiling shaper (101);
. A coiling canister (110) ; and
. an additional suspension line holding device (115) designed to hold the suspension lines (25) during coiling of the canopy (12).

21. Machine in accordance with the previous claim, **characterised by** the fact that the canopy coiling shaper (101) is in the form of a rigid sheet (98) whose edges (99) are folded back upwards, and side pieces (102) which are separated and horizontally and transversely mobile with respect to the centreline of the parachute (8) such that they can be separated or brought together and the canopy coiling shaper (101) includes a seal comprising a plate known as a stop window which can be placed against the opening in the canopy coiling shaper (101) located on the shackle side so as to prevent the strop (17) from being separated from the canopy coiling shaper (101).

22. Machine in accordance with claim 20 or 21, **characterised by** the fact that the coiling canister (110) includes coiling claws (97) and that the side pieces (102) on the canopy coiling shaper (101) can be separated in order to facilitate the insertion of the coiling claws (97) on the coiling canister (110) and/or be closed in order to hold the canopy (12) once it is coiled.

23. Machine in accordance with one of claims 20 to 22 **characterised by** the fact that the coiling canister (110) is designed to coil both the canopy (12) and the suspension lines (25), that it has sufficient coiling claws (97) to enable it to be used both for coiling the canopy (12) and for coiling the suspension lines (25) and that the number of coiling claws (97) on the coiling canister (110) used for coiling the canopy (12) and the suspension lines (25) is determined as a function of the length of the canopy (12) and/or the suspension lines (25).

24. Machine in accordance with one of claims 20 to 23, **characterised by** the fact that the coiling canister (110) has vertical coiling claws (97) arranged in two rows and mounted on pivoting arms (111) designed to pivot in a horizontal plane so that the coiling claws (97) can each form a fold (113) in the canopy (12), and **characterised by** the fact that the coiling canister (110) is mobile and can be positioned above the coiling table (103) such that the rows of coiling claws (97) on the coiling canister (110) are placed either side of the canopy (12) or the suspension lines (25) to be coiled.

25. Machine in accordance with claims 22 to 24, **characterised by** the fact that the coiling claws (97) on the coiling canister (110) have a straight and smooth part (112) used for coiling the canopy (12) and another hooked part (126) used for coiling the suspension lines (25) located in the lower part of the coiling claws (97) on the opposite side to the straight smooth parts (112).

26. Machine according to one of claims 20 to 25, **characterised by** the fact that the additional suspension lines device (115) includes two grippers (116) designed to engage in the two shackles (30) and close on to them in order to hold them in position.

27. Machine in accordance with one of the previous claims, **characterised by** the fact that the folding-coiling station (4) also has a mobile suspension line braid holding device (122) designed to move along the parachute (8) so as to maintain tension on the suspension lines (25) during coiling of the canopy (12).

28. Machine according any one of claims 15 to 27, **characterised by** the fact that the assembly for insertion of the parachute into the cloth bag (73) comprises the following subassemblies :
. A cloth bag shaper (92);
. an elastic bracelet handling tool (94) comprising spreaders (93) designed to open the elastic bracelets (91) fixed to the cloth bag (69);
. a shovel shaped tool (100) designed push the canopy (12) once it is coiled, into the cloth bag (69);
. a strop rod (104).

29. Machine in accordance with the previous claims, **characterised by** the fact that the cloth bag shaper (92) is in the form of a rigid sleeve whose opening profile is similar to that of the cloth bag (69).

30. Machine in accordance with one of claims 28 or 29, **characterised by** the fact that the elastic bracelet handling tool (94) includes spreaders (93) articulated around the common shaft (99) on each side of the handling tool (94) which enables the cloth bag (69) elastic bracelets (91) to be indexed and held part.

31. Machine in accordance with claim 25 and claims 28 to 30, **characterised by** the fact that the hooked part (126) of the coiling canister (110) coiling claws (97) is shaped in such a way that the elastic bracelets (91) leave the coiling claws (97) and remain on the suspension line loops (96) when the handling tool (94) spreaders (93) are released from the coils (96).

32. Machine in accordance with claim 22 and claims 28 to 31, **characterised by** the fact that elastic bracelet handling tool(94) spreaders (93) are designed to keep the elastic bracelets (91) apart while the suspension line coils (96) are inserted through them in a coordinated fashion by the coiling claws (97).

33. Machine in accordance with claim 20 and claims 28 to 32, **characterised by** the fact that the shovel shaped tool (100) is mounted on a horizontal shaft parallel to the centreline of the parachute (8) and includes a vertical plate (119) perpendicular to the centreline of the parachute (8) as well as the facility to move longitudinally along the centreline of the parachute (8) in order to push the canopy (12) and compress it into the canopy coiling shaper (101), and then push the coiled canopy (12) in the direction of the cloth bag (69) so as to insert it into the cloth bag shaper (92).

34. Machine in accordance with claims 28 to 33, **characterised by** the fact that the strop rod (104) is a horizontal rod parallel to the centreline of the parachute (8) which includes, on its end, an attaching device (109) directed towards the shackles (30) this attaching device (109) being preferably of the snap link type

35. Machine in accordance with claims 28 to 34, **characterised by** the fact that the strop rod (104) is designed to withdraw in synchronous fashion as the shovel shaped tool (100) advances so as to accompany the parachute (8) during insertion of the canopy (12) into the cloth bag (69).

## Patentansprüche

1. Maschine zum automatisierten Überprüfen, Zusammenlegen und Verpacken von Fallschirmen (1), **dadurch gekennzeichnet, dass** sie aus folgenden Funktionsgruppen besteht:
. ein Einlegeplatz (2), der eine Erkennung der Fallschirmkappe und die Kennzeichnung für die nachfolgenden Arbeitsschritte durchführt, dieser Platz weist eine Ladestroppvorrichtung (39) und Anhängevorrichtung (37) auf, die eine gemeinsame Funktionsgruppe bilden, wenn sie den Fallschirm (8) für die weiteren Etappen halten;
. ein Sichtkontrollplatz (3), der die Fallschirmkappe so ausrichtet, um jedes aufeinander folgende Paar von zwei Bahnen, der vierundzwanzig Bahnen (13), vor einer Bildbetrachtungsgruppe (58) auszubreiten;
. eine Station zum Zusammen- und Bandlegen (4), wo die Fallschirmkappe (12) erst in eine "Fichtenlage" positioniert und dann in einer übereinander geklappten Lage zusammengelegt wird, bevor sie in parallele Schleifen gelegt und in den Fallschirmsack gepackt wird, und wo die Fangleinen (25) in Schleifen gelegt und die Schleifen der Fangleinen (96) in den elastischen Haltebändern (91) ausgerichtet werden; und
. ein Übergabegalgen (5), der eine Anhänge-Hebevorrichtung (6) und Stropp-Hebevorrichtung (7) aufweist und die Fallschirmkappe von einem Platz zum anderen befördert.

2. Maschine nach Anspruch 1, **dadurch gekennzeichnet, dass** der automatisierte Einlegeplatz (2), der eine Erkennung und Kennzeichnung der Fallschirmkappe bewerkstelligt, folgende Mittel aufweist:
. einen Aufnahmekasten (36) für den Fallschirm (8):
. eine Stroppvorrichtung (39), an welcher die Schlinge des Scheitels (17) vom Fallschirm (8) eingehakt ist; und
. eine Anhängevorrichtung (37), an welcher der Aufhängering (30) des Fallschirms (8) angehängt wird;
der Kasten (36), befindlich zwischen diesen zwei Vorrichtungen (37, 39), die Stroppvorrichtung (39) und die Anhängevorrichtung (37) bilden für die späteren Phasen mit dem Fallschirm (8) eine funktionelle Einheit.

3. Maschine nach einem der vorstehenden Ansprüche, **dadurch gekennzeichnet, dass** die Anhängevorrichtung (37) von dem automatisierten Einlegeplatz (2) auf einer Indexplatte (38) befestigt ist, dass sie eine drehbar bewegliche Welle (46) aufweist, an der zwei, im Verhältnis zur Welle (46), gegenüberliegende Halterungen der Aufhängeringe (47, 48) montiert sind, dass sie an einem ihrer Enden einen Support zum Aufdrallen der Fallschirmkappe in Form einer Scheibe (49) besitzt und dadurch, dass das vom Fallschirm (8) am weitesten entfernte Ende der Aufhängevorrichtung (37) des automatisierten Einlegeplatzes (2) indexgebunden gleitbar, an einem versetzbaren, auf dem Boden befestigten Träger (53) montiert ist und erfasst und von einer Anhänge-Hebevorrichtung (6) des Übergabegalgens (5) bewegt werden kann.

4. Maschine nach vorhergehendem Anspruch, **dadurch gekennzeichnet, dass** die Scheibe zum Aufdrallen der Fallschirmkappe (49) des automatisierten Einlegeplatzes (2) aus zwei zueinander gelenkigen Halbscheiben (51, 52) besteht, damit sie sich wie Schmetterlingsflügel umfalten kann und dadurch, dass sie so viele Einkerbungen (50) aufweist, wie Fangleinen die in etwa gleichem Abstand auf ihrem Umfang aufgeteilt sind, diese Einkerbungen (50) sind dazu bestimmt, im Ruhestand jede der Fangleinen (25) des Fallschirms aufzunehmen, die kreisförmig und in Bündeln um eine senkrecht zur Scheibe (49) stehenden Welle und etwa parallel zu den Einkerbungen (50) und der Welle der Aufhängevorrichtung (46) zugeführt werden.

5. Maschine nach einem der vorstehenden Ansprüche 1 bis 4, **dadurch gekennzeichnet, dass** auf der Anhängevorrichtung (37) des automatisierten Einlegeplatzes (2) ein Einholmechanismus (54) vorgesehen ist, der auf einem linear gleitenden Wagen montiert ist.

6. Maschine nach einem der vorstehenden Ansprüche 1 bis 5, **dadurch gekennzeichnet, dass** die Stroppvorrichtung (39) an einem ihrer Enden eine drehbar bewegliche Welle (41) aufweist, an deren Ende sich ein Haltehaken (42) und so viele Ladestroppfinger (43) genannte Fingerelemente befinden, wie Bänder (45) der Bahnen (13) des Fallschirms (8) damit die Bänder (45) zwischen die Ladestroppfinger (43) eingeführt werden können und dadurch, dass das vom Fallschirm (8) am weitesten entfernte Ende der Stroppvorrichtung (39) mit einem, nach der beweglichen Welle (41), beweglichem Träger (44) verbunden ist und erfasst und von einem Stropp-Hebemittel (7) des Übergabegalgens (5) bewegt werden kann.

7. Maschine nach einem der vorstehenden Ansprüche 3 bis 6, **dadurch gekennzeichnet, dass** die Motoren, welche die Welle (46) der Anhängevorrichtung (37) und die Welle der Stroppvorrichtung (39) in Drehbewegung setzen, in ihrer Bewegung exakt synchron sind und dass sich diese Wellen (41, 46) auf derselben geometrischen Drehachse befinden.

8. Maschine nach einem der vorstehenden Ansprüche 1 bis 7, **dadurch gekennzeichnet, dass** der automatisierte Sichtkontrollplatz (3), der die Fallschirmkappe so ausrichtet, um jedes aufeinander folgende Paar von zwei der vierundzwanzig Bahnen (13) vor einer Bildbetrachtungsgruppe (58) auszustellen, folgende Mittel aufweist:
. einen Aufbereiter für die Sichtkontrolle (57);
. eine Bildbetrachtungsgruppe (58); und
. eine spezielle Beleuchtungseinrichtung (60).

9. Maschine nach vorhergehendem Anspruch, **dadurch gekennzeichnet, dass** der Aufbereiter für die Sichtkontrolle (57) beweglich und dafür vorgesehen ist, vorzurücken und sich im Inneren der Fallschirmkappe (12) zwischen zwei, aufeinander folgenden Bahnen (13), etwa in deren Mitte, einzuschieben und dadurch, dass er im oberen Teil eine Kippvorrichtung (62) die eine Seilscheibe oder Laufrolle (63) aufweist, die von einer Hebeeinrichtung (64) betätigt wird, die an eine Kippachse (65) montiert ist, dazu bestimmt, dass beim Aufrichten des Aufbereiters für die Sichtkontrolle (57) diese Laufrolle (63) die obere Fangleine erfasst und anhebt, was ermöglicht, einen Teil der Fallschirmkappe (12) mittels dieser Fangleine (25) emporzuheben und die zwei gegenüberliegenden Bahnen (13) vor der Bildbetrachtungsgruppe (58) auszubreiten.

10. Maschine nach vorhergehendem Anspruch, **dadurch gekennzeichnet, dass** bei einer Bildaufnahme die Seilscheibe oder Laufrolle (63) der Kippvorrichtung (62) des Aufbereiters für die Sichtkontrolle (57) sich ungefähr zehn Grad um eine etwa horizontale Achse dreht, die sich etwa in der Achse des Fallschirms (8) befindet, um die Gesamtheit einer der zwei Bahnflächen (14) zu präsentieren, die von den Bildsensoren (59) der Bildbetrachtungsgruppe (58), an ihrer Seite befindlich, untersucht werden.

11. Maschine nach einem der vorstehenden Ansprüche 8 bis 10, **dadurch gekennzeichnet, dass** die Bildbetrachtungsgruppe (58) ein digitales Bilderfassungsmodul ist, das mehrere Reihen von Bildsensoren (59) aufweist, die sich beidseitig der Fallschirmkappe (12) befinden, wenn diese im Sichtkontrollplatz (3) platziert ist.

12. Maschine nach einem der vorstehenden Ansprüche 8 bis 11, **dadurch gekennzeichnet, dass** die spezielle Beleuchtungsvorrichtung (60) eine Lichtrampe mit Leuchtdioden (61) besitzt und dadurch, dass sie sich im Inneren der Fallschirmkappe (12) befindet, wenn diese im Sichtkontrollplatz (3) platziert ist.

13. Maschine nach einem der vorstehenden Ansprüche 8 bis 12, **dadurch gekennzeichnet, dass** die am Sichtkontrollplatz (3) gewonnenen Bilder mit Informatikmitteln bearbeitet werden, was ermöglicht, auf das Vorhandensein von Mängeln an der Fallschirmkappe (12), an den Basisnetzen (22) und den Fangleinen (25) zu schließen.

14. Maschine nach einem der vorstehenden Ansprüche, **dadurch gekennzeichnet, dass** die Hebevorrichtungen (6, 7) des Übergabegalgens (5) vorteilhafterweise simultan beweglich sind.

15. Maschine nach einem der vorstehenden Ansprüche, **dadurch gekennzeichnet, dass** die Station zum Zusammen- und Bandlegen (4), in der die Fallschirmkappe (12) zusammengefaltet, in parallele Schleifen gelegt und in den Fallschirmsack (69) gepackt wird und in der die Fangleinen in Schleifen gelegt und die Schleifen der Fangleinen (96) in elastischen Haltebändern (91) ausgerichtet werden, aus folgenden automatischen Funktionsgruppen besteht:
. ein System zur linearen Verteilung der Fangleinen (70);
. eine Falteinheit (71);
. eine Bandlegeeinheit (72); und
. eine Einheit zum Einschleifen des Fallschirms in den Fallschirmsack (73).

16. Maschine nach vorhergehendem Anspruch, **dadurch gekennzeichnet, dass** das System zur linearen Verteilung der Fangleinen (70) zwei Kämme (74) aufweist, die sich gegenüber auf beiden Seiten des zusammenzufaltenden Fallschirms (8) befinden, um die kreisförmige Verteilung der Fangleinen (25) in eine lineare Zufuhr umzuwandeln und dadurch, dass die Kämme (74) jeweils zwei Zapfen (75) aufweisen und an eine bewegliche Gruppe (76) montiert sind, die ermöglicht, sie den Fangleinen (25) anzunähern oder zu entfernen sowie sie um eine Achse drehen zu lassen, die etwa horizontal und senkrecht zur Fallschirmachse (8) liegt.

17. Maschine nach einem der vorstehenden Ansprüche, **dadurch gekennzeichnet, dass** die Station zum Zusammen- und Bandlegen (4) außerdem eine Fallschirmauflage (80) besitzt, um die Fallschirmkappe (12) des Fallschirms (8) abzunehmen, diese Fallschirmauflage (80) besteht aus zwei Platten (88), wobei jede Platte (88) in sich um eine zum Fallschirm (8) etwa parallele Achse gelenkig ist, derart, dass der innenliegende gelenkige Teil (89) jeder Gelenkplatte (88) unbeweglich bleiben kann, während sich der äußere gelenkige Teil (89) jeder Gelenkplatte (88) um etwa 120 Grad umklappen kann und dadurch, dass die Station zum Zusammen- und Bandlegen (4) ferner wenigstens eine Fallschirm-Stützlangrolle (81) hat, vorzugsweise zwei, um das Tuch zu stützen.

18. Maschine nach einem der Ansprüche 15 bis 17, **dadurch gekennzeichnet, dass** die Faltgruppe (71) einen etwa horizontalen Finger (82) aufweist, der an einer sich etwa senkrecht drehenden Achse (83) montiert ist, vorgesehen auf beiden Seiten auf Höhe des unteren Teils der Fallschirmkappe (12), derart, dass bei Drehung der senkrechten Achse (83) jeder etwa horizontale Finger (82) sich zwischen zwei Fangleinen (25) einführt, um das Tuch der Fallschirmkappe (12) zu extrahieren und zu spannen, welches die zwischen diesen zwei Fangleinen (25) befindliche Bahn (13) bildet.

19. Maschine nach einem der Ansprüche 15 bis 18, **dadurch gekennzeichnet, dass** die Faltgruppe ein Mittel zum Übereinanderfalten (84) besitzt, das zwei Vorrichtungen zum Falten der Bahnen (85) aufweist, die jeweils eine Gelenkklammer (86) besitzen, die auf einen Rahmen montiert und an der Fallschirmauflage (80) befestigt ist; jede der Klammern ist in der Nähe der Außenkante, in Richtung der Anhängeschlaufe der Fallschirmauflage (80), montiert und **dadurch gekennzeichnet, dass** wenigstens eine der Klammern (86) der Vorrichtungen zum Falten der Bahnen (85) vorgesehen ist, sich umzuklappen, um die Bahnen (13) etwa in der Mitte der Bahnen (13) auf die Fallschirmauflage (80) zu drücken und dadurch, dass die Klammern (86) der Vorrichtungen zum Falten der Bahnen (85) mit den Gelenkplatten (88) der Fallschirmauflage (80) zusammenwirken, um den Fallschirm (8) ähnlich wie eine Brieftasche zusammenzufalten.

20. Maschine nach einem der Ansprüche 15 bis 19, **dadurch gekennzeichnet, dass** die Bandlegeeinheit (72) folgende Mittel aufweist:
. ein Legetisch (103);
. ein Formgeber zum Legen der Fallschirmkappe (101);
. ein Packkasten (110); und
. eine zusätzliche Haltevorrichtung der Fangleinen (115), um die Fangleinen (25) beim Bandlegen der Fallschirmkappe zu halten.

21. Maschine nach vorhergehendem Anspruch, **dadurch gekennzeichnet, dass** der Formgeber zum Legen der Fallschirmkappe (101) sich als steifes Blatt (98) darstellt, dessen Ränder (99) auf der Oberseite umgebogen sind und zur Achse des Fallschirms (8) voneinander getrennte, horizontal und transversal bewegliche Seitenteile (102) besitzt, um einzeln zurückbewegt oder herangeführt werden zu können und dadurch, dass der Formgeber zum Legen der Fallschirmkappe (101) ein Verschlusselement enthält welches ein Stroppauge genannte Scheibe aufweist, das gegen die Öffnung des Formgebers zum Legen der Fallschirmkappe (101) platziert werden kann, befindlich ringseitig, um zu verhindern, dass der Stropp (17) den Formgeber zum Legen der Fallschirmkappe (101) verlässt.

22. Maschine nach Anspruch 20 oder 21, **dadurch gekennzeichnet, dass** der Packkasten (110) Formlegefinger (97) besitzt und dadurch, dass die Seitenteile (102) des Formgebers zum Legen der Fallschirmkappe (101) sich entfernen können, um das Eintreten der Formlegefinger (97) des Packkastens (110) zu erleichtern und/oder sich zusammenzuziehen, um die Fallschirmkappe (12), einmal in Schleifen gelegt, zu halten.

23. Maschine nach einem der Ansprüche 20 bis 22, **dadurch gekennzeichnet, dass** der Packkasten (110) dafür vorgesehen ist die Fallschirmkappe (12) und die Fangleinen (25) gleichzeitig in Schleifen zu legen, dass er ausreichend Formlegefinger (97) besitzt, um gleichzeitig für das In-Schleifen-Legen der Fallschirmkappe (12) und der Fangleinen (25) verwendet zu werden und dass die Anzahl der Formlegefinger (97) des Packkastens (110), die für das Bandablegen der Fallschirmkappe (12) und der Fangleinen (25) benutzt werden, von der Länge der Fallschirmkappe (12) und/oder der Fangleinen bestimmt wird.

24. Maschine nach einem der Ansprüche 20 bis 23, **dadurch gekennzeichnet, dass** der Packkasten (110) etwa senkrechte Formlegefinger (97) besitzt, die auf zwei Reihen verteilt und an drehbaren Armen (111) montiert sind, um sich auf einer etwa horizontalen Ebene drehen zu können, damit jeder der Formlegefinger (97) einen Knick (113) in die Fallschirmkappe (12) formen kann und **dadurch gekennzeichnet, dass** der Packkasten (110) beweglich ist, um sich über dem Legetisch (103) so platzieren zu können, dass die Reihen der Formlegefinger (97) des Packkastens (110) beiderseits der in Schleifen zu legenden Fallschirmkappe (12) oder Fangleinen (25) angeordnet sind.

25. Maschine nach einem der Ansprüche 22 bis 24, **dadurch gekennzeichnet, dass** die Formlegefinger (97) des Packkastens (110) eine gradlinige und glatte Partie (112) aufweisen, die dem Bandablegen der Fallschirmkappe (12) dient und eine andere Partie in Form einer Gabel (126), die zum Legen der Fangleinen (25) dient und im unteren Teil der Formlegefinger (97), auf der gegenüberliegenden Seite der gradlinigen und glatten Partie (112), angeordnet ist.

26. Maschine nach einem der Ansprüche 20 bis 25, **dadurch gekennzeichnet, dass** die zusätzliche Haltevorrichtung der Fangleinen (115) zwei Klammern (116) aufweist, dafür gedacht, jeweils einen der zwei Aufhängeringe (30) festzuspannen und sich vorne zu schließen, um sie in Position zu halten.

27. Maschine nach einem der vorstehenden Ansprüche, **dadurch gekennzeichnet, dass** die Station zum Zusammen- und Bandlegen (4) außerdem ein bewegliches Mittel zum Halten der Fangleinenstränge (122) besitzt, das sich entlang der Fallschirmachse (8) bewegen kann, um die Spannung der Fangleinen beim Bandablegen der Fallschirmkappe (12) halten zu können.

28. Maschine nach einem der Ansprüche 15 bis 27, **dadurch gekennzeichnet, dass** die Funktionsgruppe zum Einschleifen des Fallschirms in den Fallschirmsack (73) aus folgenden Untergruppen besteht:
. ein Former für den Fallschirmsack (92);
. ein Mittel zur Manipulation der elastischen Haltebänder (94), das die Spreizer (93) aufweist, um die elastischen Haltebänder (91) zu spreizen, die auf der Rückseite des Fallschirmsacks (69) befestigt sind;
. ein schaufelblattförmiges Werkzeug (100), zum Einschieben der bandgelegten Fallschirmkappe (12) in den Fallschirmsack (69);
. ein Stroppstab (104).

29. Maschine nach vorhergehendem Anspruch, **dadurch gekennzeichnet, dass** der Former für den Fallschirmsack (92) die Form eines steifen Mantels hat, dessen Öffnungsprofil mit dem des Fallschirmsacks (69) vergleichbar ist.

30. Maschine nach Anspruch 28 oder 29, **dadurch gekennzeichnet, dass** das Mittel zur Manipulation der elastischen Haltebänder (94) Gruppen von Spreizern (93) besitzt, die auf einer gemeinsamen Achse (95), beidseitig des Mittels zur Manipulation, beweglich sind, die ermöglichen, die elastischen Haltebänder (91) des Fallschirmsacks (69) zu positionieren und gespreizt zu halten.

31. Maschine nach Anspruch 25 und nach einem der Ansprüche 28 bis 30, **dadurch gekennzeichnet, dass** die Partie in Form einer Gabel (126) der Formlegefinger (97) des Packkastens (110) so ausgebildet ist, damit die elastischen Haltebänder (91) sich von den Formlegefingern (97) trennen und auf den Schleifen der Fangleinen (96) bleiben, wenn die Spreizer (93) des Mittels zur Manipulation (94) die Schleifen (96) verlassen haben.

32. Maschine nach Anspruch 22 und nach einem der Ansprüche 28 bis 31, **dadurch gekennzeichnet, dass** die Gruppen der Spreizer (93) des Mittels zur Manipulation der elastischen Haltebänder (94) dafür bestimmt sind, die elastischen Haltebänder (91) gespreizt zu halten, während die Schleifen der Fangleinen (96) durch diese, koordiniert von den Formlegezapfen (97), abgelegt werden.

33. Maschine nach Anspruch 20 und nach einem der Ansprüche 28 bis 32, **dadurch gekennzeichnet, dass** das schaufelblattförmige Werkzeug (100) an eine etwa horizontale Welle und parallel zur Fallschirmachse (8) montiert ist und eine etwa vertikale und senkrecht zur Fallschirmachse (8) stehende Platte (119) aufweist sowie Mittel, um sich längs in der Fallschirmachse (8) zu bewegen und die Fallschirmkappe (12) im Formgeber zum Legen der Fallschirmkappe (101) zusammen zu pressen und die in Schleifen gelegte Fallschirmkappe (12) in Richtung Fallschirmsack (69) zu schieben, um sie in den Former für den Fallschirmsack (92) abzulegen.

34. Maschine nach einem der Ansprüche 28 bis 33, **dadurch gekennzeichnet, dass** der Stroppstab (104) eine zur Fallschirmachse (8) etwa horizontale und parallele Stange ist, die an ihrem zu den Ringen (30) gerichteten Ende eine Einhängevorrichtung (109) hat, diese Einhängevorrichtung (109) sei vorzugsweise vom Typ Karabinerhaken zum Einhängen der Scheitelschlinge (17) an den Stroppstab (104) und dadurch, dass sie Mittel besitzt, um sich axial in Richtung der Fangleinen (96) zu bewegen, damit sie in den Fallschirmsack (69), der auf dem Former für den Fallschirmsack (92) ausgerichtet ist, durch eine im Boden dafür vorgesehene Öffnung (108) eindringen kann, und dadurch, dass ihr Ende auf der anderen Seite des Sacks (69) wieder austritt, indem sie den gesamten Former für den Fallschirmsack (92) durchquert.

35. Maschine nach einem der Ansprüche 28 bis 34, **dadurch gekennzeichnet, dass** der Stroppstab (104) dafür bestimmt ist, synchron zurückzusetzen, während das schaufelblattförmige Werkzeug (100) vorrückt, um den Fallschirm (8) bei der Etappe des Einschleifens der Fallschirmkappe (12) in den Fallschirmsack (69) zu begleiten.
